(19) Europäisches Patentamt
European Patent Office
Office européen des brevets

(11) **EP 3 137 524 B1**

(12) **EUROPÄISCHE PATENTSCHRIFT**

(45) Veröffentlichungstag und Bekanntmachung des Hinweises auf die Patenterteilung:
**01.08.2018 Patentblatt 2018/31**

(21) Anmeldenummer: **15720308.4**

(22) Anmeldetag: **24.04.2015**

(51) Int Cl.:
***C08F 279/04*** *(2006.01)* ***C08L 55/02*** *(2006.01)*
***C08F 2/22*** *(2006.01)* ***C08L 25/12*** *(2006.01)*

(86) Internationale Anmeldenummer:
**PCT/EP2015/058892**

(87) Internationale Veröffentlichungsnummer:
**WO 2015/165810 (05.11.2015 Gazette 2015/44)**

(54) **THERMOPLASTISCHE FORMMASSEN MIT OPTIMIERTEM RESTMONOMERANTEIL**

THERMOPLASTIC MOLDING COMPOUNDS WITH AN OPTIMIZED RESIDUAL MONOMER CONTENT

MATIÈRES MOULÉES THERMOPLASTIQUES À POURCENTAGE OPTIMISÉ DE MONOMÈRES RÉSIDUELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.04.2014 EP 14166531**

(43) Veröffentlichungstag der Anmeldung:
**08.03.2017 Patentblatt 2017/10**

(73) Patentinhaber: **INEOS Styrolution Group GmbH 60325 Frankfurt (DE)**

(72) Erfinder:
• **WALKER, Roland 69076 Osnabrück (DE)**

• **MICHELS, Gisbert 51375 Leverkusen (DE)**
• **BANASZAK, Brian J. 68161 Mannheim (DE)**

(74) Vertreter: **Jacobi, Markus Alexander Isenbruck Bösl Hörschler LLP Eastsite One Seckenheimer Landstrasse 4 68163 Mannheim (DE)**

(56) Entgegenhaltungen:
**DE-A1-102005 022 632    DE-A1-102005 022 635**

**Beschreibung**

Gegenstand der vorliegenden Erfindung ist ein Verfahren zur Herstellung von Styrol-Pfropf-Copolymeren, umfassend das Zugeben von Styrol-Monomeren A1 und Vinylcyanid-Monomeren A2 zu einer Pfropfgrundlage B (Pfropf-Copolymerisieren). Dabei ist das Masseverhältnis der Komponenten A1 zu A2 der Monomerenzugabe am Ende des Zugabe-Zeitraums der Monomeren-Zugabe niedriger als das Masseverhältnis über den gesamten Zeitraum der Monomerenzugabe integriert. Ferner betrifft die vorliegende Erfindung auch Pfropf-Copolymere, erhältlich nach dem Verfahren gemäß der vorliegenden Erfindung, sowie Formmassen, die ein derartiges Pfropf-Copolymer enthalten, sowie aus derartigen Formmassen enthaltene Formteile.

Styrol-Pfropf-Copolymere, die eine Pfropfhülle aus Styrol- und Vinylcyanid-Monomeren aufweisen, sind im Stand der Technik bekannt. So sind beispielsweise AcrylnitrilButadien-Styrol-Pfropf-Copolymere (ABS-Copolymere), die eine Polybutadien-haltige Pfropfgrundlage B und eine Acrylnitril- und Styrol-haltige Pfropfhülle A aufweisen, in zahlreichen Ausführungsformen bekannt. DE-A 10 2005 022635 betrifft thermoplastische Formmassen mit verbesserter Anfärbbarkeit, wobei unter anderem auch die Herstellung von ABS-Copolymeren gelehrt wird. DE-A 10 2005 022632 betrifft die Agglomerisation von Kautschukdispersionen. Derartige Styrol-Pfropf-Copolymere werden zudem regelmäßig mit weiteren Polymeren vermischt (compoundiert), um daraus schlagzähmodifizierte Formmassen (Polymer-Blends) herzustellen, etwa durch Extrudieren der Styrol-Pfropf-Copolymere mit weiteren Polymeren. Beispielsweise werden derartige schlagzähmodifizierte Formmassen verwendet, um Formteile herzustellen, die über eine erhöhte Schlagzähigkeit und Elastizität verfügen.

Solche Formteile dienen beispielsweise als Bestandteile der Innen- und Außenausstattung von Kraftfahrzeugen und Gebäuden, als Möbel, als Bestandteile von Haushalts-, Elektro-, Sport- und Medizingeräten, Werkzeugen, Konsumgütern, Kinderspielzeug (z.B. Klemmbausteinen), Musikinstrumenten, Chipkarten, sicherheitstechnischen Vorrichtungen (z.B. Helmen und Knieschonern), Brillen und Verpackungen. Derartige Formteile können zudem, im Gegensatz zu vielen anderen Kunststoffformteilen mit Metallen beschichtet (galvanisiert) und ebenso mit zahlreichen anderen Formmassen und Metallen zu Verbundwerkstoffen verbunden werden. Ferner können derartige ABS-Pfropf-Copolymere enthaltende, schlagzähmodifizierte Formmassen in 3D-Druckern verwendet werden.

Erschwert wird die Anwendung von Styrol-Pfropf-Copolymeren in Formmassen und daraus hergestellten Formteilen dadurch, dass die nach der Pfropf-Copolymerisation zurückbleibenden Restmonomere (Styrol- und Vinylcyanid-Monomere) bereits wegen ihres Geruchs unerwünscht sind, und oftmals vom Nutzer als störend empfunden werden.

So müssen beispielsweise gerade in sensiblen Bereichen, wie bei der Verwendung der Formmassen zu Herstellung von Nahrungsmittelverpackungen, die in direktem Kontakt zu einem Nahrungsmittel stehen, und bei der Verwendung in Medizinprodukten, Laborgeräten und Kinderspielzeug, die nach der Pfropf-Copolymerisation verbliebenen Restmonomere unter Einsatz aufwendiger Verfahren vor oder während der Compoundierung abgetrennt werden, um den Restmonomeranteil zu senken und ein geruchsneutraleres Produkt zu erhalten.

Es besteht demnach ein Bedarf an Verfahren, bei denen die Styrol-Pfropf-Copolymere weniger Restmonomere, insbesondere weniger Styrol-Monomere enthalten oder letztere zumindest leichter von den Styrol-Pfropf-Copolymeren abtrennbar sind.

Überraschend wurde gefunden, dass bei einem Verfahren, wenn beim Pfropf-Copolymerisieren von Styrol-Monomeren A1 und Vinylcyanid-Monomeren A2 auf die Pfropfgrundlage B das Masseverhältnis von A1 zu A2 am Ende der Monomeren-Zugabe-Zeit abgesenkt wird, Styrol-Pfropf-Copolymere und daraus herstellbare Formmassen erhalten werden, die weniger Restmonomere aufweisen. Diese Formmassen sind u.a. geruchsneutraler. Zudem verfügen die durch dieses Verfahren hergestellten Styrol-Pfropf-Copolymere an ihrer Oberfläche (im äußeren Bereich des Copolymers) über einen höheren Vinylcyanid-Anteil, der dem Anteil deutlich näher kommt, der häufig bei der zusätzlich in Formmassen eingesetzten Polymermatrix (z.B. SAN) verwendet wird. Dies kann eine weitere Verbesserung der Mischbarkeit der Styrol-Pfropf-Copolymere mit der Polymermatrix bewirken. Die Bereitstellung verbesserter Formmassen wird ermöglicht.

Ein erster Aspekt der Erfindung betrifft ein Verfahren zum Herstellen von Styrol-Pfropf-Copolymeren, umfassend die folgenden Schritte:

(i) Bereitstellen und Agglomerieren der in einer Emulsion vorliegenden Pfropfgrundlage B;
(ii) Zugeben von Styrol-Monomeren A1 und Vinylcyanid-Monomeren A2 zu der Pfropfgrundlage B über einen definierten Zeitraum der Monomerenzugabe; und
(iii) gleichzeitiges Pfropf-Copolymerisieren der zugegebenen Styrol-Monomere A1 und der Vinylcyanid-Monomere A2 auf die agglomerierten Pfropfgrundlage B,

bei welchemin Schritt (ii) das Masseverhältnis von Styrol-Monomeren A1 zu Vinylcyanid-Monomeren A2 der Monomerenzugabe am Ende, erfindungsgemäß im letzten Fünftel, des Zeitraums der Monomerenzugabe um mindestens 10% niedriger ist als das Masseverhältnis der Komponenten der Monomerenzugabe über den gesamten Zeitraum der Monomerenzugabe integriert.

Bevorzugt sind Styrol-Pfropf-Copolymere im Sinne der Erfindung solche, die in thermoplastischen Formassen verwendet werden können. Diese weisen bevorzugt selbst weitgehend thermoplastische Eigenschaften auf. Die durch das erfindungsgemäße Verfahren erhältlichen Styrol-Pfropf-Copolymere umfassen typischerweise eine Pfropfgrundlage B als Kern und eine Pfropfhülle A. Die Pfropfhülle A enthält (als Bausteine) die Styrol-Monomere A1 und Vinylcyanid-Monomere A2. Bevorzugt, aber nicht notwendigerweise, weisen die durch das erfindungsgemäße Verfahren erhältlichen (bzw. erhaltenen) Styrol-Pfropf-Copolymere eine weitgehend sphärische Struktur auf. Die Styrol-Pfropf-Copolymere werden bevorzugt partikulär gewonnen, wobei bei der Compoundierung mit anderen Polymeren (daher bei der Herstellung von Polymer-Blendbasierten Formmassen), insbesondere unter erhöhten Temperaturen, optional faserartige Verbindungen zwischen mehreren Styrol-Pfropf-Copolymer-Partikeln entstehen können. Beispielhaft entstehen derartige Strukturen aus bzw. mit geschmolzener Pfropfgrundlage.

Wenn ein Merkmal hierin als "weitgehend" gekennzeichnet ist, bezeichnet dies, dass das betreffende Merkmal vollständig erfüllt vorliegen kann oder nahezu (z.B. mindestens 95 %) erfüllt sein kann. Beispielsweise kann auch eine ellipsoide oder amorphe Struktur in der Regel als weitgehend sphärisch verstanden werden, sowie auch partikuläre Strukturen, die über faserartige Verbindungen miteinander verbunden sind, die deutlich dünner sind als die partikulären Strukturen, als weitgehend sphärisch verstanden werden können.

Bevorzugt weist die eingesetzte Pfropfgrundlage B eine weitgehend sphärische Struktur auf. Bevorzugt beträgt der mittlere Durchmesser der Partikel $d_{50}$ der Pfropfgrundlage B 25-2500 nm, bevorzugt 30-2000 nm, bevorzugt 40-1000 nm, bevorzugt 50-750 nm, bevorzugt 60-500 nm, bevorzugt 70-400 nm, insbesondere 75-300 nm. Der mittlere Durchmesser der Pfropfgrundlage B kann auch in etwa 75-200 nm oder 75-150 nm betragen.

Der mittlere Teilchen-Durchmesser $d_{50}$ soll verstanden werden als der Durchmesser, bei dem 50 Gew-% der Teilchen einen kleineren und 50 Gew-% der Teilchen einen größeren Durchmesser haben als es dem mittlere Durchmesser $d_{50}$ entspricht.

Darüber hinaus werden Teilchen-Durchmesser $d_{10}$ und $d_{90}$-Werte wie folgt definiert: $d_{10}$ ist der Durchmesser, bei welchem 10 Gew.-%. der Partikel kleiner sind als dieser Wert und $d_{90}$ ist der Durchmesser, bei dem 90 Gew.-% der Partikel kleiner sind als dieser Wert.

Die Berechnung gewichtsmittleren Teilchengröße $d_w$ kann mittels der Formel erfolgen:

$$d_w = \text{Summe} \left( ni * di^4 \right) / \text{Summe}\left( ni * di^3 \right),$$

wobei ni: Anzahl der Partikel mit dem Durchmesser di).

Zur Messung des mittleren Durchmessers $d_{50}$ und der gewichtsmittleren Teilchengröße $d_w$ der Pfropfgrundlage B bzw. des Pfropf-Copolymers kann eine Scheibenzentrifuge verwendet werden. Die Messung kann beispielhaft in einer wässrigen Zuckerlösung mit einem Saccharose-Dichtegradienten von 8 bis 20 Gew.-% erfolgen, was ein besonders stabiles Flotationsverhalten ermöglicht. Ein Polybutadienlatex mit einer vergleichsweise engen Verteilung und einer mittleren Teilchengröße kann für die Kalibrierung verwendet werden.

Die Teilchengrößenverteilung der Pfropfgrundlage B kann beliebig sein. Bevorzugt weisen 90% der Teilchen der Pfropfgrundlage B eine Größe auf, die im Bereich von nicht mehr als +/- 75% Abweichung vom mittleren Durchmesser der Pfropfgrundlage B liegt. Wenn daher die Pfropfgrundlage B beispielhaft einen mittleren Durchmesser von 100 nm aufweist, weisen 90% der Teilchen der Pfropfgrundlage B eine Größe auf, die im Bereich von 25-175 nm liegt.

Stärker bevorzugt weisen 90% der Teilchen der Pfropfgrundlage B eine Größe auf, die im Bereich von nicht mehr als +/- 50% Abweichung vom mittleren Durchmesser der Pfropfgrundlage B liegt, noch stärker bevorzugt im Bereich von nicht mehr als +/- 25% Abweichung vom mittleren Durchmesser der Pfropfgrundlage B, insbesondere im Bereich von nicht mehr als +/- 15% Abweichung vom mittleren Durchmesser der Pfropfgrundlage B.

Optional können auch zwei Pfropfgrundlagen B mit unterschiedlichen mittleren Durchmessern eingesetzt werden. Dann können nach dem erfindungsgemäßen Verfahren bimodulare (bimodale) Styrol-Pfropf-Copolymere erhalten werden. Ebenso können optional auch drei Pfropfgrundlagen B mit unterschiedlichen mittleren Durchmessern eingesetzt werden. Dann können nach dem erfindungsgemäßen Verfahren trimodulare Styrol-Pfropf-Copolymere erhalten werden. Ebenso können optional auch mehr als drei Pfropfgrundlagen B mit unterschiedlichen mittleren Durchmessern eingesetzt werden. Dann können nach dem erfindungsgemäßen Verfahren multimodulare Styrol-Pfropf-Copolymere erhalten werden.

Das Agglomerieren der Pfropfgrundlage B kann auf verschiedene Weise erfolgen. Beispielsweise kann ein Copolymer aus einem oder mehreren $C_1$-$C_{12}$-Aklyl(meth)acrylaten und einem oder mehreren hydrophilen Comonomeren (z.B. Acrylamid, Methylacrylamid, Ethacrylamid und/oder n-Butylacrylamid) eingesetzt werden, um das Agglomerieren zu ermöglichen.

So wird beispielhaft ein Copolymer aus Ethylacrylat und Methylacrylamid eingesetzt. Derartiges Agglomerisieren ist dem Fachmann bekannt, beispielsweise aus WO 2008/020012, DE 10 2005 022 632 und DE 10 2005 022 635.

Darüber hinaus sind dem Fachmann weiter Möglichkeiten bekannt, die Pfropfgrundlage B zu agglomerisieren, siehe z.B. EP-A 0 022 200, EP-A 0 077 038 und WO 2002/010222. Typischerweise erfolgt das Agglomerieren der Pfropfgrundlage B in einer Dispersion enthaltend das Agglomerisierungs-Mittel, wie beispielhaft in WO 2014/170406, WO 2014/170407 oder PCT/EP2014/057826 beschrieben, und die Pfropfgrundlage B in einem geeigneten Lösungsmittel. Bespielhaft kann die Agglomerisation wie in einer der vorstehend genannten Patentanmeldungen beschrieben durchgeführt werden.

Das Zugeben der Styrol-Monomere A1 und der Vinylcyanid-Monomere A2 zu der Pfropfgrundlage B kann kontinuierlich oder schrittweise erfolgen. Das Zugeben kann automatisiert oder manuell erfolgen. Die pro Zeitintervall zugegebene Gesamt-Monomeren-Menge an Styrol-Monomeren A1 und Vinylcyanid-Monomeren A2 ($\sum$A1+A2) kann über den gesamten Zeitraum der Monomerenzugabe gleichbleiben, ansteigen, abfallen oder anderweitig variieren.

Das Pfropf-Copolymerisieren kann auf jede im Stand der Technik bekannte Weise initiiert werden, etwa thermisch (durch Temperaturerhöhung), durch Radikalstarter (z.B. Peroxide (z.B. Benzoylperoxid), Azoverbindungen (z.B. 2,2'-Azo-bis-isobutyronitril, AIBN), Persulfate, Redox-Initiatoren bestehend aus einem organischen Hydroperoxid, einem Reduktionsmittel und optional einem Übergangsmetallsalz, Brönstedt-Säuren (z.B. Perchlorsäure oder Trifluormethansulfonsäure) und/oder tertiären Systemen (z.B. einem tertiärem System umfassend Benzoylperoxid-3,6-bis(o-Carboxybenzoyl)-N-Isopropylcarbazol und Indenylzirconiumdichlorid)), durch Einstrahlung von energiereicher Strahlung (z.B. Licht z.B. im Bereich von < 400 nm), radioaktiver Strahlung ($\alpha$-, $\beta$- oder $\gamma$-Strahlung und/oder Röntgenstrahlung), elektrolytisch (daher durch Stromfluss zwischen mit den Monomeren in Kontakt gebrachten Elektroden), durch Plasma und/oder durch Zuführen von hochenergetischem Ultraschall.

Die Polymerisation kann ein beliebiges Polymerisationsverfahren sein, etwa Emulsionspolymerisation, radikalische Massepolymerisation oder Lösungspolymerisation. Bevorzugt wird eine Emulsionspolymerisation verwendet, insbesondere Emulsionspolymerisation in wässriger Lösung.

Besonders bevorzugt enthält der wässrige Emulsionsansatz beim Abschluss der Monomerenzugabe einschließlich einer optionalen Nachrührphase und somit auch der Pfropf-Copolymerisation etwa 30-50 Gew.-% Feststoff (daher Styrol-Pfropf-Copolymere und Restmonomere) in 50-70 Gew.-% wässriger Lösung, beispielhaft etwa 38-42 Gew.-% Feststoff (daher Styrol-Pfropf-Copolymere und Restmonomere) in 58-62 Gew.-% wässriger Lösung.

Die Länge des Zeitraums der Monomerenzugabe, über den die Monomere A1 und A2 zugegeben werden, hängt von den verwendeten Komponenten (Pfropfgrundlage B, Styrol-Monomeren A1 und Vinylcyanid-Monomeren A2), dem verwendeten Polymerisationsverfahren und den verwendeten Reaktionsbedingungen (z.B. Temperatur, Druck, eventuell verwendete Lösungsmittel) ab. Der Zeitraum der Monomerenzugabe kann wenige Minuten (z.B. 2 bis 5), einige Minuten (z.B. 6 bis 30), eine Stunde oder mehrere Stunden (z.B. 2 bis 5) betragen. Bevorzugt beträgt der Zeitraum der Monomerenzugabe, und somit auch der Copolymerisation, zwischen 30 min und 6 h, stärker bevorzugt zwischen 2 und 5 h, besonders bevorzugt zwischen 1 h und 3 h. Diese erfolgt bevorzugt während einer wässrigen Emulsionspolymerisation bei einer Temperatur von 50-150°C, insbesondere von 60-85°C. Definiert ist der Zeitraum der Monomerenzugabe dadurch, dass bevorzugt vor dem Start der Reaktion festgelegt wird, wie lang polymerisiert werden soll.

Das "Ende des Zeitraums" der Monomerenzugabe bezeichnet bevorzugt die letzten 10% des Zeitraums der Monomerenzugabe. Beispielhaft beträgt daher das Ende eines Zeitraums der Monomerenzugabe von einer Stunde (=60 min) gerade 6 min.

Bevorzugt ist zumindest in der letzten Minute des Zeitraums der Monomerenzugabe das Masseverhältnis von A1 zu A2 der Monomerenzugabe niedriger als das Masseverhältnis der Monomerenzugabe über den gesamten Zeitraum der Monomerenzugabe integriert. Bevorzugt ist zudem zumindest in den letzten fünf Minuten des Zeitraums der Monomerenzugabe das Masseverhältnis von A1 zu A2 der Monomerenzugabe niedriger als das Masseverhältnis der Monomerenzugabe über den gesamten Zeitraum der Monomerenzugabe integriert.

Bleibt, wie es optional angewandt werden kann, die pro Zeitintervall zugegebene Gesamt-Monomeren-Menge an Styrol-Monomeren A1 und Vinylcyanid-Monomeren A2 über den gesamten Zeitraum der Monomerenzugabe gleich, bedeutet ein niedrigeres Masseverhältnis von A1 zu A2 am Ende des Zeitraums der Monomerenzugabe, dass implizit am Ende des Zeitraums der Monomerenzugabe mehr Vinylcyanid-Monomere A2 zugegeben werden als über den gesamten Zeitraum der Monomerenzugabe integriert und, dass gleichfalls am Ende des Zeitraums der Monomerenzugabe weniger Styrol-Monomere A1 zugegeben werden als über den gesamten Zeitraum der Monomerenzugabe integriert.

Sinkt, wie es optional angewandt werden kann, die pro Zeitintervall zugegebene Gesamt-Monomeren-Menge an Styrol-Monomeren A1 und Vinylcyanid-Monomeren A2 über den gesamten Zeitraum der Monomerenzugabe hin ab, bedeutet ein niedrigeres Masseverhältnis von A1 zu A2 am Ende des Zeitraums der Monomerenzugabe, dass implizit am Ende des Zeitraums der Monomerenzugabe weniger Styrol-Monomere A1 zugegeben werden als über den gesamten Zeitraum der Monomerenzugabe integriert, wobei die Menge an zugegebenen Vinylcyanid-Monomeren A2 nicht unbedingt sinkt oder steigt.

Steigt, wie es optional angewandt werden kann, die pro Zeitintervall zugegebene Gesamt-Monomeren-Menge an Styrol-Monomeren A1 und Vinylcyanid-Monomeren A2 über den gesamten Zeitraum, bedeutet ein niedrigeres Masseverhältnis von A1 zu A2 am Ende des Zeitraums der Monomerenzugabe, dass implizit am Ende des Zeitraums der Monomerenzugabe mehr Vinylcyanid-Monomere A2 zugegeben werden als über den gesamten Zeitraum der Monomerenzugabe integriert, wobei die Menge an zugegebenen Styrol-Monomere A1 nicht unbedingt sinkt oder steigt.

Nach dem Ende des Zeitraums der Monomerenzugabe kann der Reaktionsansatz optional noch für einen weiteren Zeitraum unter Bedingungen belassen werden, die eine weitere Polymerisation der restlichen Monomere erlauben (Nachrührphase) oder aber, alternativ dann die Polymerisation abgebrochen werden.

Das Masseverhältnis der Monomerenzugabe entspricht dem Masseverhältnis der innerhalb eines bestimmten Zeitintervalls zugegebenen Styrol-Monomeren A1 zu in demselben Zeitintervall zugegebenen Vinylcyanid-Monomeren A2.

Das Masseverhältnis der Monomerenzugabe kann sich demnach aus dem Masseverhältnis zwischen Styrol-Monomeren A1 und Vinylcyanid-Monomeren A2, die gleichzeitig zugegeben werden ergeben, beispielsweise, wenn A1 und A2 in einer Mischung miteinander vorliegen und die Mischung in das Reaktionsgefäß, indem das Pfropf-Copolymerisieren stattfindet, zugegeben wird, oder wenn A1 und A2 jeweils unabhängig in das Reaktionsgefäß, indem das Pfropf-Copolymerisieren stattfindet, gleichzeitig zugegeben werden.

Alternativ kann sich das Masseverhältnis der Monomerenzugabe auch aus dem Masseverhältnis von A1 zu A2 ergeben, wobei A1 und A2 jeweils innerhalb eines Zeitintervalls von weniger als 5 min, bevorzugt weniger als 2 min, stärker bevorzugt weniger als 1 min, insbesondere weniger als 30 s in das Reaktionsgefäß, in dem das Pfropf-Copolymerisieren stattfindet, zugegeben werden.

Das über den gesamten Zeitraum der Monomerenzugabe integrierte Masseverhältnis der Monomerenzugabe entspricht dem Masseverhältnis der Gesamtmasse an insgesamt über den gesamten Zeitraum der Monomerenzugabe zugegebenen Styrol-Monomeren A1 zur Gesamtmasse an insgesamt über den gesamten Zeitraum der Monomerenzugabe zugegebenen Vinylcyanid-Monomeren A2

$$(\text{daher} \quad \int^{\text{total}} A1 \text{ zu } \int^{\text{total}} A2).$$

Ein Styrol-Pfropf-Copolymer kann bereits nach Schritt (iii) des Verfahrens erhalten werden, oder es können ein oder mehrere weitere Polymerisationsschritte folgen.

Gemäß einer bevorzugten Ausführungsform schließt sich an Schritt (iii) der folgende Schritt (iv) an:

(iv) die Zugabe von Vinylcyanid-Monomeren A2 und Pfropf-Copolymerisieren dieser auf die agglomerierte Pfropfgrundlage B, wobei keine Styrol-Monomere A1 zugegeben werden.

Die Zugabe und das Pfropf-Copolymerisieren nach Schritt (iv) kann die alleinige Zugabe von Vinylcyanid-Monomeren A2, optional in einem Lösungsmittel sein. Alternativ könne auch Polymerisations-Initiatoren, Zusätze und/oder weitere Monomere, die nicht Styrol-Monomere A1 sind, zugegeben werden. Die Zugabe von Vinylcyanid-Monomeren A2 und Pfropf-Copolymerisieren dieser auf die Pfropfgrundlage B gemäß Schritt (iv) kann hierbei über einen im Prinzip beliebigen Zeitraum der Monomerenzugabe erfolgen. Beispielhaft kann dieser Zeitraum der Monomerenzugabe weniger als 10 min, 10 min oder mehr, 20 min oder mehr, 30 min oder mehr oder mehr als eine Stunde (z.B. 1,1 bis 3 Stunden) betragen. Dieser Zeitraum der Monomerenzugabe kann dabei weniger als 1%, 1% oder mehr, 5% oder mehr, 10% oder mehr, 20% oder mehr, 50% oder mehr oder mehr als 75% des Zeitraums der Monomerenzugabe nach Schritt (ii) betragen.

Hierbei liegt der Zeitraum der Monomerenzugabe, und somit auch der Copolymerisation, bevorzugt zwischen 30 min und 6 h, stärker bevorzugt zwischen 2 und 5 h, besonders bevorzugt zwischen 1 h und 3 h.

Erfindungsgemäß kann die bei dem Verfahren eingesetzte Pfropfgrundlage B jede Pfropfgrundlage sein, die dazu geeignet ist, dass Styrol-Monomere und Vinylcyanid-Monomere darauf pfropf-copolymerisiert werden können. Der Fachmann erkennt, dass die Pfropfgrundlage B bevorzugt, aber nicht notwendigerweise, solche den Monomeren A1 und A2 zugängliche Vinylgruppen (C=C-Doppelbindungen) enthält. Alternativ oder zusätzlich kann die Pfropfgrundlage B optional auch andere funktionelle Gruppen aufweisen, wie etwa solche, die in der Lage sind, radikal zu bilden.

Gemäß einer bevorzugten Ausführungsform ist die Pfropfgrundlage B eine kautschukhaltige Pfropfgrundlage. Eine kautschukhaltige Pfropfgrundlage soll hierbei im weitesten Sinne als eine Pfropfgrundlage B, die hauptsächlich elastische Polymere enthält, verstanden werden. Bevorzugt enthalten derartige elastische Polymere Vinylgruppen (C=C-Doppelbindungen).

Gemäß einer stärker bevorzugten Ausführungsform enthält die Pfropfgrundlage B mehr als 50 Gew.-%, bezogen auf den Feststoffanteil, Dienkautschuk oder Dien-Vinyl-Copolymer-Kautschuk.

Bevorzugt enthält die Pfropfgrundlage B mehr als 60 Gew.-%, bevorzugt mehr als 70 Gew.-%, bevorzugt mehr als 80 Gew.-%, insbesondere mehr als 90 Gew.-% bezogen auf den Feststoffanteil Dienkautschuk oder Dien-Vinyl-Copolymer-Kautschuk.

Besonders bevorzugt enthält die Pfropfgrundlage B mehr als 60 Gew.-%, bevorzugt mehr als 70 Gew.-%, bevorzugt mehr als 80 Gew.-% bezogen auf den Feststoffanteil Dienkautschuk, insbesondere mehr als 90 Gew.-% bezogen auf den Feststoffanteil Dienkautschuk, insbesondere Polybutadien. Besonders bevorzugt enthält die Pfropfgrundlage B mehr als 50 Gew.-% bezogen auf den Feststoffanteil Polybutadien, noch stärker bevorzugt mehr als 60 Gew.-% bezogen auf den Feststoffanteil Polybutadien, noch stärker bevorzugt mehr als 70 Gew.-% bezogen auf den Feststoffanteil Polybutadien, noch stärker bevorzugt mehr als 80 Gew.-% bezogen auf den Feststoffanteil Polybutadien, insbesondere mehr als 90 Gew.-% bezogen auf den Feststoffanteil Polybutadien.

Die Pfropfgrundlage B enthält etwa 79-100 Gew.-% bezogen auf den Feststoffanteil Polybutadien und etwa 0-21 Gew.-% bezogen auf den Feststoffanteil Styrol-Monomere, bevorzugt etwa 90-100 Gew.-% bezogen auf den Feststoffanteil Polybutadien und etwa 0-10 Gew.-% bezogen auf den Feststoffanteil Styrol-Monomere, insbesondere etwa 90-95 Gew.-% bezogen auf den Feststoffanteil Polybutadien und etwa 5-10 Gew.-% bezogen auf den Feststoffanteil Styrol-Monomere. Optional kann die Pfropfgrundlage B zudem andere Monomere enthalten, wie beispielsweise 0-10 Gew.-% bezogen auf den Feststoffanteil Vinylcyanid-Monomere (etwa Acrylnitril-Monomere).

Auf die Pfropfgrundlage B wird nach dem erfindungsgemäßen Verfahren eine Pfropfhülle A, die Styrol-Monomere A1 und Vinylcyanid-Monomere A2 enthält, pfropf-copolymerisiert.

Die Styrol-Monomere können hierbei beliebige Styrol-Monomere sein. Die Styrol-Monomere können Monomere eines Monomeren-Typs sein oder können eine Mischung unterschiedlicher Styrol-Monomere sein. Gemäß einer bevorzugten Ausführungsform sind die Styrol-Monomere A1 ausgewählt aus der Gruppe bestehend aus Styrol, alpha-Me-thylstyrol, $C_1$-$C_8$-Alkyl-kernsubstituiertem Styrol, oder Mischungen aus zwei oder mehr daraus. Gemäß einer besonders bevorzugten Ausführungsform sind die Styrol-Monomere A1 Styrol.

Die Vinylcyanid-Monomere A2 können beliebige Vinylcyanid-Monomere sein. Die Vinylcyanid-Monomere A2 können Monomere eines Monomeren-Typs sein oder können eine Mischung unterschiedlicher Vinylcyanid-Monomere sein. Gemäß einer bevorzugten Ausführungsform sind die Vinylcyanid-Monomere A2 Acrylnitril, Methacrylnitril oder Mischungen daraus, insbesondere jedoch Acrylnitril.

Bevorzugt sind die Styrol-Monomere A1 ausgewählt aus der Gruppe bestehend aus Styrol, alpha-Methylstyrol, $C_1$-$C_8$-Alkyl-kernsubstituiertem Styrol, oder Mischungen aus zwei oder mehr daraus und die Vinylcyanid-Monomere A2 Acrylnitril, Methacrylnitril oder Mischungen daraus. Besonders bevorzugt sind die Styrol-Monomere A1 Styrol und die Vinylcyanid-Monomere A2 Acrylnitril.

Das Masseverhältnis von Styrol-Monomeren A1 zu Vinylcyanid-Monomeren A2 (A1 zu A2) in der Pfropfhülle kann beliebig sein. Bevorzugt überwiegen die Styrol-Monomere A1 (daher A1 zu A2 > 1).

Daher beträgt gemäß einer bevorzugten Ausführungsform das Masseverhältnis von Styrol-Monomeren A1 zu Vinylcyanid-Monomeren A2 über den gesamten Zeitraum der Monomerenzugabe integriert zwischen 50 zu 50 und 95 zu 5, bevorzugt zwischen 60 zu 40 und 90 zu 10, stärker bevorzugt zwischen 65 zu 35 und 90 zu 10, insbesondere zwischen 70 zu 30 und 85 zu 15. Demgemäß ist ein Verfahren zum Herstellen von Styrol-Pfropf-Copolymeren bevorzugt, das die folgenden Schritte umfasst:

(i) Bereitstellen und Agglomerieren der in einer Emulsion vorliegenden Pfropfgrundlage B, die 79-100 Gew.-% bezogen auf den Feststoffanteil Polybutadien und 0-21 Gew.-% bezogen auf den Feststoffanteil Polybutadien Styrol-Monomere enthält;

(ii) Zugeben von Styrol A1 und Acrylnitril A2 im Masseverhältnis von A1 zu A2 von zwischen 60 zu 40 und 90 zu 10 zu der Pfropfgrundlage B über einen definierten Zeitraum der Monomerenzugabe; und

(iii) gleichzeitiges Pfropf-Copolymerisieren des zugegebenen Styrols A1 und Acrylnitrils A2 auf die agglomerierte Pfropfgrundlage B,

bei welchem in Schritt (ii) das Masseverhältnis Styrol A1 zu Acrylnitril A2 der Monomerenzugabe im letzten Zehntel des Zeitraums der Monomerenzugabe niedriger ist als das Masseverhältnis der Monomerenzugabe über den gesamten Zeitraum der Monomerenzugabe integriert.

Wie bereits oben dargestellt, ist bei dem erfindungsgemäßen Verfahren das Masseverhältnis von Styrol-Monomeren A1 zu Vinylcyanid-Monomeren A2 am Ende des Zeitraums der Monomerenzugabe niedriger als das Masseverhältnis über den gesamten Zeitraum der Monomerenzugabe integriert.

Erfindungsgemäß ist in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 10% niedriger als das Masseverhältnis über den gesamten Zeitraum der Monomerenzugabe integriert.

Stärker bevorzugt ist in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 15% niedriger als das Masseverhältnis über den gesamten Zeitraum der Monomeren-Zugabe integriert. Gemäß einer bevorzugten Ausführungsform ist in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 20% niedriger als das Masseverhältnis über den gesamten Zeitraum der Monomerenzugabe integriert.

Gemäß einer bevorzugten Ausführungsform ist in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 25% niedriger ist als das Masseverhältnis über den gesamten Zeitraum der Monomerenzugabe integriert.

Besonders bevorzugt ist in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 28% niedriger ist als das Masseverhältnis über den gesamten Zeitraum der Monomerenzugabe integriert.

Erfindungsgemäß ist zudem in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 10% niedriger ist als das Masseverhältnis über den gesamten Zeitraum der Monomerenzugabe integriert, bevorzugt um mindestens 15% niedriger ist als das Masseverhältnis über den gesamten Zeitraum der Monomerenzugabe integriert, insbesondere um mindestens 20% niedriger ist als das Masseverhältnis über den gesamten Zeitraum der Monomerenzugabe integriert.

Noch stärker bevorzugt ist zudem in Schritt (ii) das Masseverhältnis von Styrol-Monomeren A1 zu Vinylcyanid-Monomeren A2 der Monomerenzugabe in der zweiten Hälfte des Zeitraums der Monomerenzugabe um mindestens 5% niedriger ist als das Masseverhältnis über den gesamten Zeitraum der Monomerenzugabe integriert, bevorzugt um mindestens 10% niedriger ist als das Masseverhältnis über den gesamten Zeitraum der Monomerenzugabe integriert, insbesondere um mindestens 15% niedriger ist als das Masseverhältnis über den gesamten Zeitraum der Monomerenzugabe integriert.

Es kann auch optional am Ende des Zeitraums der Monomerenzugabe die Zugabe von Styrol-Monomeren A1 vollständig eingestellt werden und nur noch Vinylcyanid-Monomere A2 zugegeben werden. Das Ende des Zeitraums der Monomerenzugabe ist hierbei im weitesten Sinne zu verstehen wie oben definiert. Dann entspricht das Ende des Zeitraums der Monomerenzugabe in etwa Schritt (iv) mit dem Unterschied, dass keine vorausgehende Absenkung des Masseverhältnisses von A1 zu A2 vorausgesetzt ist.

Besonders bevorzugt ist ein Verfahren zum Herstellen von Styrol-Pfropf-Copolymeren, das die folgenden Schritte umfasst:

(i) Bereitstellen und Agglomerieren der in einer Emulsion vorliegenden Pfropfgrundlage B, die 79-100 Gew.-% bezogen auf den Feststoffanteil Polybutadien und 0-21 Gew.-% bezogen auf den Feststoffanteil Styrol-Monomere enthält;

(ii) Zugeben von Styrol A1 und Acrylnitril A2 im Masseverhältnis von A1 zu A2 von zwischen 60 zu 40 und 90 zu 10 zu der Pfropfgrundlage B über einen definierten Zeitraum der Monomerenzugabe; und

(iii) gleichzeitiges Pfropf-Copolymerisieren des zugegebenen Styrols A1 und Acrylnitrils A2 auf die agglomerierte Pfropfgrundlage B,

bei welchem in Schritt (ii) das Masseverhältnis Styrol A1 zu Acrylnitril A2 der Monomerenzugabe im letzten Zehntel des Zeitraums der Monomerenzugabe um mindestens 10% niedriger ist als das Masseverhältnis der Monomerenzugabe über den gesamten Zeitraum der Monomerenzugabe integriert.

Das Masseverhältnis von Styrol-Monomeren A1 zu Vinylcyanid-Monomeren A2 kann in Schritt (ii) über den Zeitraum der Monomerenzugabe hinweg zunehmend sinken oder erst am Ende des Zeitraums der Monomerenzugabe (etwa in der zweiten Hälfte, im letzten Fünftel oder letzten Zehntel) des Zeitraums der Monomerenzugabe der Monomeren-Zugabe abgesenkt werden.

Gemäß einer bevorzugten Ausführungsform sinkt in Schritt (ii) das Masseverhältnis von Styrol-Monomeren A1 zu Vinylcyanid-Monomeren A2 über den Zeitraum der Monomerenzugabe hinweg zunehmend.

Das Masseverhältnis sinkt demnach nicht erst am Ende des Zeitraums der Monomerenzugabe, sondern in mindestens zwei, drei, vier oder mehr Schritten oder weitgehend kontinuierlich über den Zeitraum der Monomerenzugabe hinweg. Bevorzugt steigt das Masseverhältnis hierbei auch nicht zwischenzeitlich an.

Gemäß einer bevorzugten Ausführungsform sinkt das Masseverhältnis über den Zeitraum der Monomerenzugabe hinweg kontinuierlich.

Eine kontinuierliche Absenkung ist im weitesten Sinne zu verstehen als eine immer weitere Absenkung des Masseverhältnisses von A1 zu A2 über den Zeitraum der Monomerenzugabe hinweg. Das Masseverhältnis kann hierbei ein beliebiges Gradienten-Profil aufweisen. So kann das Masseverhältnis bespielhaft linear oder exponentiell abgesenkt werden und/oder gegen ein bestimmtes Masseverhältnis korrelieren. Bevorzugt sinkt das Masseverhältnis von A1 zu A2 über den Zeitraum der Monomerenzugabe kontinuierlich linear.

Besonders bevorzugt ist demnach ein Verfahren zum Herstellen von Styrol-Pfropf-Copolymeren, das die folgenden Schritte umfasst:

(i) Bereitstellen und Agglomerieren der in einer Emulsion vorliegenden Pfropfgrundlage B, die 90-100 Gew.-% bezogen auf den Feststoffanteil Polybutadien und 0-10 Gew.-% bezogen auf den Feststoffanteil Styrol-Monomere enthält;

(ii) Zugeben von Styrol A1 und Acrylnitril A2 im Masseverhältnis von A1 zu A2 von zwischen 60 zu 40 und 90 zu 10 zu der Pfropfgrundlage B über einen definierten Zeitraum der Monomerenzugabe; und

(iii) gleichzeitiges Pfropf-Copolymerisieren des zugegebenen Styrols A1 und Acrylnitrils A2 auf die agglomerierte Pfropfgrundlage B,

bei welchem in Schritt (ii) das Masseverhältnis Styrol A1 zu Acrylnitril A2 der Monomerenzugabe über den Zeitraum der Monomerenzugabe hinweg weitgehend kontinuierlich linear sinkt, wobei das Masseverhältnis im letzten Zehntel des Zeitraums der Monomerenzugabe um mindestens 10% niedriger ist als das Masseverhältnis der Monomerenzugabe über den gesamten Zeitraum der Monomerenzugabe integriert.

Es können beliebige Masseverhältnisse von Pfropfgrundlage B zu Pfropfhülle Styrol-Monomeren A1 und Vinylcyanid-Monomeren A2 eingesetzt werden.

Gemäß einer bevorzugten Ausführungsform beträgt das Masseverhältnis Pfropfgrundlage B zu Pfropfhülle aus Styrol-Monomeren A1 und Vinylcyanid-Monomeren A2 zwischen 80 zu 20 und 20 zu 80, stärker bevorzugt zwischen 70 zu 30 und 30 zu 70, noch stärker bevorzugt zwischen 70 zu 30 und 50 zu 50, insbesondere zwischen 58 zu 42 und 62 zu 38.

Besonders bevorzugt ist demnach ein Verfahren zum Herstellen von Styrol-Pfropf-Copolymeren, das die folgenden Schritte umfasst:

(i) Bereitstellen von 50-70 Gew.-Teilen einer agglomerierten Pfropfgrundlage B, die 90-100 Gew.-% bezogen auf den Feststoffanteil Polybutadien und 0-10 Gew.-% bezogen auf den Feststoffanteil Styrol-Monomere enthält;

(ii) Zugeben von insgesamt 30-50 Gew.-Teilen Styrol A1 und Acrylnitril A2 im Masseverhältnis von A1 zu A2 von zwischen 60 zu 40 und 90 zu 10 zu der Pfropfgrundlage B über einen definierten Zeitraum der Monomerenzugabe; und

(iii) gleichzeitiges Pfropf-Copolymerisieren des zugegebenen Styrols A1 und Acrylnitrils A2 auf die agglomerierte Pfropfgrundlage B,

bei welchem in Schritt (ii) das Masseverhältnis Styrol A1 zu Acrylnitril A2 der Monomerenzugabe über den Zeitraum der Monomerenzugabe hinweg weitgehend kontinuierlich linear sinkt, wobei das Masseverhältnis im letzten Zehntel des Zeitraums der Monomerenzugabe um mindestens 10% niedriger ist als das Masseverhältnis der Monomerenzugabe über den gesamten Zeitraum der Monomerenzugabe integriert.

Ganz besonders bevorzugt ist demnach ein Verfahren zum Herstellen von Styrol-Pfropf-Copolymeren, das die folgenden Schritte umfasst:

(i) Bereitstellen von 50-70 Gew.-Teilen einer agglomerisierten Pfropfgrundlage B, die 90-95 Gew.-% bezogen auf den Feststoffanteil Polybutadien und 5-10 Gew.-% bezogen auf den Feststoffanteil Styrol-Monomere enthält;

(ii) Zugeben von insgesamt 30-50 Gew.-Teilen Styrol A1 und Acrylnitril A2 im Masseverhältnis von A1 zu A2 von zwischen 60 zu 40 und 90 zu 10 zu der Pfropfgrundlage B über einen definierten Zeitraum der Monomerenzugabe;

(iii) gleichzeitiges Pfropf-Copolymerisieren des zugegebenen Styrols A1 und Acrylnitrils A2 auf die agglomerisierte Pfropfgrundlage B; und

(iv) nachfolgendes Zugeben von Vinylcyanid-Monomeren A2 und Pfropf-Copolymerisieren dieser auf die Pfropfgrundlage B, wobei keine Styrol-Monomere A1 zugegeben werden,

bei welchem in Schritt (ii) das Masseverhältnis Styrol A1 zu Acrylnitril A2 der Monomerenzugabe über den Zeitraum der Monomerenzugabe hinweg weitgehend kontinuierlich linear sinkt, wobei das Masseverhältnis im letzten Zehntel des Zeitraums der Monomerenzugabe um mindestens 10% niedriger ist als das Masseverhältnis der Monomerenzugabe über den gesamten Zeitraum der Monomerenzugabe integriert.

Die aus dem oben dargestellten erfindungsgemäßen Verfahren erhaltenen Styrol-Pfropf-Copolymere werden bevorzugt durch Emulsionspolymerisation hergestellt und danach mittels Inkontaktbringen mit Salzlösung gefällt. Hierbei wird der Anteil an hydrophoben, daher weitgehend unlöslichen Styrol-Monomeren, die mit den Styrol-Pfropf-Copolymeren assoziiert sind, kaum vermindert. Die hydrophileren, besser wasserlöslichen Vinylcyanid-Monomere werden dagegen durch Inkontaktbringen mit wässriger Salzlösung abgetrennt. Das erfindungsgemäße Verfahren erlaubt jedoch auch die Verringerung der verbleibenden Styrol-Restmonomere.

Gemäß einer bevorzugten Ausführungsform werden die erhaltenen Styrol-Pfropf-Copolymere nach dem Polymerisieren der Styrol-Monomeren A1 und Vinylcyanid-Monomere A2 mit wässriger Salzlösung in Kontakt gebracht.

Bevorzugt ist die wässrige Salzlösung eine nicht-toxische und geruchsneutrale wässrige Salzlösung, insbesondere eine wässrige Salzlösung, die weitgehend frei von toxischen und geruchsintensiven Bestandteilen ist. Der Vorteil des Verwendens einer nicht-toxischen und geruchsneutralen wässrigen Salzlösung liegt unter anderem darin, dass die erhaltenen Styrol-Pfropf-Copolymere dann besonders unbedenklich auch in sensiblen Anwendungsfeldern weiterverwendet werden können. Diese wässrige Salzlösung kann jede Salzlösung sein, in der die gebildeten Styrol-Pfropf-Copolymere nicht oder schlecht löslich sind.

Bevorzugt enthält die Salzlösung etwa zwischen 10 mM und 1000 mM Kationen, stärker bevorzugt zwischen 20 mM und 500 mM Kationen, noch stärker bevorzugt zwischen 30 mM und 400 mM Kationen, noch stärker bevorzugt zwischen 40 mM und 300 mM Kationen, noch stärker bevorzugt zwischen 50 mM und 200 mM Kationen, insbesondere zwischen 50 nM und 100 mM Kationen. Bevorzugt sind die Kationen anorganische Metallkationen, insbesondere Magnesiumkationen ($Mg^{2+}$).

Bevorzugt enthält die Salzlösung etwa zwischen 10 mM und 1000 mM Anionen, stärker bevorzugt zwischen 20 mM und 500 mM Anionen, noch stärker bevorzugt zwischen 30 mM und 400 mM Anionen, noch stärker bevorzugt zwischen 40 mM und 300 mM Anionen, noch stärker bevorzugt zwischen 50 mM und 200 mM Anionen, insbesondere zwischen 50 nM und 100 mM Anionen. Bevorzugt sind die Anionen anorganische Anionen, insbesondere Sulfat-Anionen ($SO_4^{2-}$). Besonders bevorzugt enthält die wässrige Salzlösung etwa zwischen 0,2 und 5 Gew.-% Magnesiumsulfat ($MgSO_4$), noch stärker bevorzugt etwa zwischen 0,5 und 2 Gew.-% Magnesiumsulfat, noch stärker bevorzugt etwa zwischen 0,6 und 1,5 Gew.-% Magnesiumsulfat, insbesondere etwa zwischen 0,6 und 1,2 Gew.-% Magnesiumsulfat.

Das Inkontaktbringen der Styrol-Pfropf-Copolymere mit der wässrigen Salzlösung kann auf beliebige Art erfolgen. Beispielhaft kann zu der, die Styrol-Pfropf-Copolymere enthaltenden, wässrigen Emulsion Salz (beispielsweise Magnesiumsulfat) zugegeben werden. Alternativ kann auch eine höher konzentrierte Salzlösung zugegeben werden, die dann zusammen mit der wässrigen Emulsion die gewünschte Endkonzentration ergibt.

Gemäß einer noch stärker bevorzugten Ausführungsform werden hierbei die Styrol-Pfropf-Copolymere anschließend von der wässrigen Salzlösung abgetrennt.

Dies kann in einem, aber nicht beschränkenden Fall, erfolgen, indem die Styrol-Pfropf-Copolymere durch das Inkontaktbringen mit der wässrigen Salzlösung aus der Emulsionslösung ausfallen und mittels eines beliebigen im Stand der Technik verfügbaren Verfahrens abgetrennt werden können. So können die Styrol-Pfropf-Copolymere beispielsweise abfiltriert und/oder ab-zentrifugiert werden. Auch Cross-Flow-Filtrationssysteme sind alternativ zur Abtrennung geeignet.

Die abgetrennten nicht polymerisierten Vinylcyanid-Monomere A2 können hierbei verworfen oder wiederverwendet werden.

Gemäß einer bevorzugten Ausführungsform werden die nicht polymerisierten Vinylcyanid-Monomere A2 anschließend von der wässrigen Salzlösung abgetrennt und gegebenenfalls für die Zugabe gemäß Schritt (ii) oder (iv) wiederverwendet.

Optional können die abgetrennten Vinylcyanid-Monomere A2 vor der Widerverwendung aufgereinigt, was durch beliebige Standardverfahren wie beispielsweise Säulenchromatographie erfolgen kann.

Nach dem erfindungsgemäßen Verfahren sind Styrol-Pfropf-Copolymere erhältlich, bei denen der Restmonomeren-Anteil verringert ist.

Demgemäß betrifft ein weiterer Aspekt der Erfindung ein Styrol-Pfropf-Copolymer erhältlich (bzw. erhalten) nach dem erfindungsgemäßen Verfahren.

Bei einem solchen Styrol-Pfropf-Copolymer kann die Monomeren-Verteilung der polymerisierten Monomere der Pfropfhülle A optional einen Gradient aufweisen, so dass näher an der Pfropfgrundlage B der Anteil an Vinylcyanid-Monomeren A2 geringer und der Anteil an Styrol-Monomeren A1 höher ist als weiter außerhalb an der Oberfläche des Styrol-Pfropf-Copolymers.

Die Ausprägung eines derartigen Gradienten hängt von dem Gradienten-Profil der Absenkung des Masseverhältnisses von A1 zu A2 während der Polymerisation der Monomere A1 und A2 auf die Pfropfgrundlage B ab. Demgemäß erlaubt das erfindungsgemäße Verfahren auch bei einem routinemäßig verwendeten Verhältnis von etwa 80 Gewichtsteilen Styrol zu 20 Gewichtsteilen Vinylcyanid an der Oberfläche der hieraus erhaltenen Styrol-Pfropf-Copolymere einen höheren Vinylcyanid-Anteil, der dem deutlich näher kommt, was routinemäßig als Polymermatrix verwendet wird (eine Styrol-Acrylnitril-Matrix mit einem Verhältnis von 70-75 Gewichtsteilen Styrol zu 25-30 Gewichtsteilen Acrylnitril). Das erlaubt eine weitere Verbesserung der Mischbarkeit der Styrol-Pfropf-Copolymere mit der Polymermatrix und demnach die Bereitstellung verbesserter Formmassen.

Bevorzugt weist das Styrol-Pfropf-Copolymer hierbei eine weitgehend sphärische Struktur auf. Bevorzugt beträgt der mittlere Durchmesser $d_{50}$ des Styrol-Pfropf-Copolymers 25-2500 nm, stärker bevorzugt 30-2000 nm, noch stärker bevorzugt 40-1000 nm, noch stärker bevorzugt 50-750 nm, noch stärker bevorzugt 60-500 nm, noch stärker bevorzugt 70-400 nm, insbesondere 75-300 nm. Der mittlere Durchmesser des tyrol-Pfropf-Copolymers kann auch in etwa 75-200 nm, 75-150 nm, oder 100-130 nm betragen.

Die Teilchengrößenverteilung des Styrol-Pfropf-Copolymers kann beliebig sein. Bevorzugt weisen 90% der Teilchen des Styrol-Pfropf-Copolymers eine Größe auf, die im Bereich von nicht mehr als +/- 75% Abweichung vom mittleren Durchmesser des Styrol-Pfropf-Copolymers liegt. Wenn daher das Styrol-Pfropf-Copolymer beispielhaft einen mittleren Durchmesser von 120 nm aufweist, weisen 90% der Teilchen des Styrol-Pfropf-Copolymers eine Größe auf, die im Bereich von 30-210 nm liegt.

Stärker bevorzugt weisen 90% der Teilchen des Styrol-Pfropf-Copolymers eine Größe auf, die im Bereich von nicht mehr als +/- 50% Abweichung vom mittleren Durchmesser des Styrol-Pfropf-Copolymers liegt, noch stärker bevorzugt im Bereich von nicht mehr als +/- 25% Abweichung vom mittleren Durchmesser des Styrol-Pfropf-Copolymers, insbesondere im Bereich von nicht mehr als +/- 15% Abweichung vom mittleren Durchmesser des Styrol-Pfropf-Copolymers. Wie oben dargelegt, können bei der Verwendung von Pfropfgrundlagen B mit unterschiedlichen mittleren Durchmessern optional auch bimodulare, trimodulare oder sogar multimodulare Styrol-Pfropf-Copolymere erhalten werden.

Besonders bevorzugt sind Styrol-Pfropf-Copolymere, bei denen die Pfropfgrundlage B eine kautschukhaltige Pfropfgrundlage ist und die Pfropfhülle A mindestens ein Monomer ausgewählt aus der Gruppe bestehend aus Styrol, alpha-Methylstyrol, $C_1$-$C_8$-Alkylkernsubstituiertem Styrol und halogen-kernsubstituiertem Styrol als Komponente A1 und mindestens ein Acrylnitril- oder Methacrylnitril als Komponente A2 enthält.

Bevorzugt sind Styrol-Pfropf-Copolymere, bei denen die Pfropfgrundlage B mehr als 50 Gew.-% Dienkautschuk enthält, und die Pfropfhülle A Styrol als Komponente A1 und Acrylnitril als Komponente A2 enthält. Auch bevorzugt sind Styrol-Pfropf-Copolymere, bei denen die Pfropfgrundlage B mehr als 50 Gew.-%, bezogen auf den Feststoffanteil, Polybutadien enthält und die Pfropfhülle A zu mindestens 50 Gew.-% bezogen auf den Feststoffanteil aus Styrol und Acrylnitril (daher der Summe der Komponenten A1 und A2) besteht.

Ganz besonders bevorzugt sind Styrol-Pfropf-Copolymere, bei denen die Pfropfgrundlage B 90-100 Gew.-% bezogen auf den Feststoffanteil aus Polybutadien und 0-10 Gew.-% bezogen auf den Feststoffanteil Styrol enthält und die Pfropfhülle A zu mindestens 80 Gew.-% bezogen auf den Feststoffanteil aus Styrol und Acrylnitril (daher der Summe der Komponenten A1 und A2) besteht. Ganz besonders bevorzugte Styrol-Pfropf-Copolymere sind beispielhaft solche, bei denen die Pfropfgrundlage B aus 90-100 Gew.-% bezogen auf den Feststoffanteil Polybutadien und 0-10 Gew.-% bezogen auf den Feststoffanteil Styrol besteht und die Pfropfhülle A etwa 80 Gew.-% bezogen auf den Feststoffanteil Styrol und etwa 20 Gew.-% bezogen auf den Feststoffanteil Acrylnitril umfasst.

Bevorzugt liegt der in den Styrol-Pfropf-Copolymeren enthaltende Restmonomeranteil (daher der Anteil an Styrol-Monomeren A1 und Acrylnitril-Monomeren A2 zusammen) so niedrig wie möglich.

Ganz besonders bevorzugt enthält ein erfindungsgemäßes Styrol-Pfropf-Copolymer jeweils bezogen auf den Feststoffanteil:

30-50 Gew.-%     Pfropfhülle A, umfassend 60-90 Gew.-% Styrol und 10-40 Gew.-% Acrylnitril; und

50-70 Gew.-%     Pfropfgrundlage B, umfassend 90-100 Gew.-% Polybutadien und 0-10 Gew.-% Styrol,

wobei der Anteil an Restmonomeren zusammen unter 600 ppm liegt.

Das erfindungsgemäße Styrol-Pfropf-Copolymer wird bevorzugt mit anderen ein oder mehreren anderen thermoplastischen (Co-)Polymeren vermischt verwendet (daher zu Polymer-Blends compoundiert).

Demgemäß betrifft ein weiterer Aspekt der Erfindung eine Formmasse enthaltend ein erfindungsgemäßes Styrol-Pfropf-Copolymer sowie mindestens eine weitere thermoplastische Polymer-Komponente.

Eine solche Formmasse enthält durch den geringeren Anteil an Restmonomeren in den Styrol-Pfropf-Copolymeren auch selbst weniger Restmonomere. Daher ist die Formmasse (und das Formteil) geruchsneutraler als vergleichbare Formmassen, die ein entsprechendes Styrol-Pfropf-Copolymer, das nicht durch das erfindungsgemäße Verfahren erhalten wurde, enthalten. Zudem verfügt die Formmasse über verbesserte mechanische und rheologische Eigenschaften, da das erfindungsgemäße Styrol-Pfropf-Copolymer wie oben beschrieben durch seinen erhöhten Anteil an Vinylcyanid-Monomeren an der Oberfläche verbessert mit der Polymermatrix vermischt und gleichmäßiger in die die Styrol-Pfropf-Copolymere eingebettet wird.

Die Herstellung der erfindungsgemäßen Formmassen aus dem erfindungsgemäßen Styrol-Pfropf-Copolymer und mindestens einer weiteren thermoplastischen Polymer-Komponente kann nach allen bekannten, hierzu geeigneten Verfahren erfolgen. Vorzugsweise erfolgt jedoch das Abmischen der Komponenten durch Schmelzevermischung, beispielsweise gemeinsames Extrudieren, Kneten oder Verwalzen der Komponenten. Dies kann bei Temperaturen im Bereich von 160 bis 400°C, bevorzugt von 180 bis 280°C durchgeführt werden. In einer bevorzugten Ausführungsform wird das Styrol-Pfropf-Copolymer zuvor aus der bei den jeweiligen Herstellungsschritten erhaltenen wässrigen Dispersion teilweise oder vollständig isoliert.

Beispielsweise kann das Styrol-Pfropf-Copolymer als feuchte Krümel/Pulver (beispielsweise mit einer Restfeuchte von 1 bis 40 %, insbesondere 20 bis 40 %) mit den Matrix-Polymeren vermischt werden, wobei dann während des Vermischens die vollständige Trocknung der Pfropfcopolymere erfolgt.

Gemäß einer bevorzugten Ausführungsform enthält die Formmasse neben einem erfindungsgemäßen Styrol-Pfropf-Copolymer mindestens ein Styrol-Copolymer.

Gemäß einer stärker bevorzugten Ausführungsform enthält die Formmasse neben einem erfindungsgemäßen Styrol-Pfropf-Copolymer ein Styrol-Vinylcyanid-Copolymer.

Bevorzugt weist das Styrol-Vinylcyanid-Copolymer ein Masseverhältnis von Styrol zu Vinylcyanid von zwischen 70 zu 20 und 90 zu 10 auf, stärker bevorzugt von zwischen 70 zu 30 und 80 zu 20, insbesondere von zwischen 74 zu 26 und 78 zu 22.

Gemäß einer noch stärker bevorzugten Ausführungsform enthält die Formmasse neben einem erfindungsgemäßen Styrol-Pfropf-Copolymer ein Styrol-Acrylnitril-Copolymer (SAN-Copolymer, SAN).

Gemäß einer noch stärker bevorzugten Ausführungsform enthält die Formmasse neben einem erfindungsgemäßen Styrol-Pfropf-Copolymer ein Styrol-Acrylnitril-Copolymer mit einem Masseverhältnis von Styrol zu Acrylnitril zwischen 70:30 und 90:10.

Besonders bevorzugt weist das Styrol-Vinylcyanid-Copolymer ein Masseverhältnis von Styrol zu Vinylcyanid zwischen 70 zu 30 und 80 zu 20 auf, insbesondere von zwischen 74 zu 26 und 78 zu 22 auf, beispielshaft von etwa 76 zu 24. Das Styrol-Vinylcyanid-Copolymer, insbesondere Styrol-Acrylnitril-Copolymer, weist bevorzugt ein mittleres Molekulargewicht (Mw) von 50 bis 250 kDa auf, stärker bevorzugt ein Molekulargewicht von 75 bis 200 kDa, noch stärker bevorzugt ein Molekulargewicht von 100 bis 200 kDa. Beispielshaft ist das mittlere Molekulargewicht bei etwa 120 kDa oder etwa 150 kDa. Dem Fachmann sind zahlreiche Verfahren bekannt, um das mittlere Molekulargewicht zu ermitteln, so wie beispielhaft durch Gelpermeations-Chromatografie (GPC), Sedimentationsanalyse mittels Zentrifugation und Viskosimetrie (daher Bestimmung des rheologischen Verhaltens in Lösung). Bevorzugt kann das mittlere Molekulargewicht durch Viskosimetrie bestimmt werden wobei das mittlere Molekulargewicht dem Viskositätmittel der Molmasse entspricht.

Bevorzugt umfasst die Formmasse zu mindestens 50 Gew.-% Styrol-Vinylcyanid-Copolymer, stärker bevorzugt umfasst die Formmasse zu mindestens 60 Gew.-% Styrol-Vinylcyanid-Copolymer, noch stärker bevorzugt umfasst die Formmasse zu mindestens 70 Gew.-% Styrol-Vinylcyanid-Copolymer, noch stärker bevorzugt umfasst die Formmasse zu mindestens 80 Gew.-% Styrol-Vinylcyanid-Copolymer, noch stärker bevorzugt umfasst die Formmasse zu mindestens 90 Gew.-% Styrol-Vinylcyanid-Copolymer, insbesondere umfasst die Formmasse zu mindestens 95 Gew.-% Styrol-Vinylcyanid-Copolymer.

Hierbei ist das Styrol-Vinylcyanid-Copolymer bevorzugt ein solches wie vorstehend definiert, daher ganz besonders bevorzugt ein Styrol-Acrylnitril-Copolymer mit einem ein Masseverhältnis von Styrol zu Vinylcyanid von zwischen 70 zu 30 und 80 zu 20 und einem mittleren Molekulargewicht (Mw) von etwa 100 bis 200 kDa.

Gemäß einer anderen bevorzugten Ausführungsform enthält die Formmasse zusätzlich mindestens ein Polycarbonat, mindestens einen Polyester oder mindestens ein Polyamid.

Ferner kann die Formmasse gemäß der Erfindung eine oder mehrere weitere Komponente(n) enthalten. So können optional beispielsweise ein oder mehrere Additiv(e) in der Formmasse enthalten sein. Wie hierin verwendet, können die Begriffe "Additiv", "Hilfsstoff", "Zuschlagsstoff" und "Zusatzstoff" austauschbar verwendet werden. Additive können im weitesten Sinne alle nichtpolymeren Zusätze sein. Bevorzugt weist ein Additiv entweder unter Normalbedingungen (20°C, 1013 mbar, nicht mit einem Lösungsmittel versetzt) eine wachs- oder talkartige Textur auf und/oder weist ein Molekulargewicht von nicht mehr als 5 kDa, bevorzugt nicht mehr als 1 kDa auf.

Ein Additiv im Sinne der vorliegenden Erfindung kann jedes Additiv, die für die Verwendung in thermoplastischen Formmassen sein. Beispielhaft kann das Additiv ein Stabilisierungsmittel (z.B. ein Licht-Stabilisator (z.B. ein UV-Licht absorbierendes Mittel, ein Resorcin, Salicylat, Benzotriazol oder Benzophenon), ein Verfahrenshilfsmittel, ein Radikalfänger oder ein Glanzvermittler sein.

Es kann auch ein Antioxidans sein (z.B. ein Hydrochinonderivat, ein Tocopherolderivat, eine Irganox-Verbindung, ein phenolisches Antioxidanz, schwefelhaltige Verbindung), ein Metall-Chelator, ein antistatisches Mittel (N,N-Bis(hydroxyalkyl)alkylamine oder - alkylenamine, Polyethylenglycolester, Copolymere aus Ethylenoxidglycol und Propylenoxidglycol (insbesondere Zweiblock- oder Dreiblockcopolymere aus Ethylenoxid- und Propylenoxid-Blöcken) und Glycerinmono- und -distearate, sowie deren Mischungen), ein Flusshilfsmittel, ein Antihaftmittel, ein Metallion, eine Fettsäure, ein Farbstoff/Pigment (z.B. Industrieruß, Titandioxid, Phtalocyanide, Ultramarinblau, Eisenoxid, Zinkoxid, oder ein anderer anorganischer oder organischer Farbstoff), ein Verstärkungsmittel, ein Verdickungsmittel, ein Verdünnungsmittel, ein Compoundierungs-Vermittler, ein Füllstoff (z.B. Kaolin, Kreide, Talk, Kalziumcarbonat, Magnesiumcarbonat, Glaskugeln, Silikat, Quarz, Glimmer, Mica, Bentonite, Feldspat, Calciumsilikate oder Graphit) sein.

Auch kann es ein Antitropfmittel (z.B. Polytetrafluorethylen oder hochmolekulares Polystyrol (Mw > 2000 kDa)), Fasern (z.B. Glasfasern, Kohlenstoffnanoröhren), Aluminiumoxid, ein Gleit- und Entformungsmittel (z.B. Stearinsäuren, Stearylalkohol, Stearinsäureester, Amidwachse (Bisstearylamid), Polyolefinwachse bzw. allgemein höhere Fettsäuren, deren Derivate und entsprechende Fettsäuregemische mit 12 bis 30 Kohlenstoffatomen, Ethylen-bis-stearamid (z.B. Irgawax, BASF, Ludwigshafen, deutschland) und/oder ein Flammschutzmittel (z.B. ein halogen- und/oder phosphorhaltiges Flammschutzmittel, Magnesiumhydroxid) sein.

Aus den erfindungsgemäßen Formmassen lassen sich mittels Standardverfahren für die Verarbeitung von Thermoplasten Formteile herstellen, wie beispielsweise durch Extrudieren, Spritzgießen, Blasformen (Hohlkörperblasen), Pressen, Sintern, Presssintern, Tiefziehen oder Kalandrieren. Alternativ kann das Formteil auch durch 3D-Druck hergestellt werden.

Demnach betrifft ein weiterer Aspekt der Erfindung ein Formteil erhalten aus einer erfindungsgemäßen Formmasse.

Ein derartiges Formteil kann beispielsweise ein weitgehend festes Kunststoffteil oder ein elastisches Kunststoffteil sein. Die Formteile können beispielsweise Halbzeuge, Folien, Fasern, Schäume oder Platten sein. Das Formteil kann optional neben der erfindungsgemäßen Formmasse Fasern enthalten, daher faserverstärkt sein.

Ein derartiges Formteil enthält durch den geringeren Anteil an Restmonomeren in der diesem zugrundeliegenden Formmasse selbst auch einen geringeren Anteil an Restmonomeren.

Daher ist auch das Formteil geruchsneutraler als vergleichbare Formteile, die aus einer entsprechenden Formmasse hergestellt wurden, die nicht durch das erfindungsgemäße Verfahren erhalten wurde. Zudem verfügt das Formteil über verbesserte mechanische Eigenschaften, da in der dem Formteil zugrundeliegenden Formmasse das erfindungsgemäße Styrol-Pfropf-Copolymer wie oben beschrieben durch seinen erhöhten Anteil an Vinylcyanid-Monomeren an der Oberfläche verbessert mit der Polymermatrix vermischt und gleichmäßiger in die die Styrol-Pfropf-Copolymere eingebettet wird.

Das Formteil kann optional auch Teil eines Verbundwerkstoffs sein, daher beispielsweise mit mindestens einer Metallschicht, mindestens einem Metallschichtpartikel, mindestens einer Holzschicht, mindestens einem Holzpartikel, mindestens einer Kunststoffschicht und/oder mindestens einem Kunststoffpartikel verbunden sein. Dadurch kann optional auch eine Sandwichbauweise erreicht werden.

Derartige Verbundwerkstoffe können erhalten werden indem entweder zuerst das erfindungsgemäße Formteil hergestellt und danach mit einem anderen Bestandteil oder mehreren anderen Bestandteilen verbunden wird, oder aber erst unmittelbar bei der Herstellung des Verbundwerkstoffs hergestellt.

Demnach betrifft ein weiterer Aspekt der Erfindung einen Verbundwerkstoff der ein erfindungsgemäßes Formteil enthält.

Ein erfindungsgemäßes Formteil oder ein erfindungsgemäßer Verbundwerkstoff kann selbst ein Produkt sein oder Teil eines Produkts sein.

Demnach betrifft ein weiterer Aspekt der Erfindung ein Produkt, das ein erfindungsgemäßes Formteil und/oder einen erfindungsgemäßen Verbundwerkstoff enthält.

Die nachfolgend aufgeführten experimentellen Beispiele und die Ansprüche dienen der Verdeutlichung der Erfindung.

Beispiele

1. Einsetzbare Untersuchungsmethoden

Zunächst werden die zur Charakterisierung der Polymere einsetzbaren Untersuchungsmethoden kurz zusammengefasst:

a) Charpy-Kerbschlagzähigkeit [$kJ/m^2$]:
Die Kerbschlagzähigkeit kann an Probekörpern (80 x 10 x 4 mm, hergestellt durch Spritzguss bei einer Massetemperatur von 240°C und einer Werkzeugtemperatur 35 von 70°C), bei 23°C nach ISO 179-1A (in der 2014 aktuellen Version) ermittelt werden.

b) Fließfähigkeit (MVR [ml/10 min]):
Die Fließfähigkeit kann an einer Polymerschmelze bei 220°C und 10 kg Belastung nach ISO 1133 (in der 2014 aktuellen Version) ermittelt werden.

c) Teilchengröße [nm]:
Zur Messung der gewichtsmittleren Teilchengröße $d_w$ der Kautschukdispersionen der Pfropfgrundlage B und der agglomerierten Pfropfgrundlage B kann eine Scheibenzentrifuge DC 24000 von CPS Instruments Inc. Verwendet werden.

Die Messung kann in 17,1 ml einer wässrigen Zuckerlösung mit einem Saccharose-Dichtegradienten von 8 bis 20 Gew.-%, um ein stabiles Flotationsverhalten der Partikel zu erreichen, ermittelt werden. Ein Polybutadienlatex mit einer engen Verteilung und einer mittleren Teilchengröße von 405 nm kann für die Kalibrierung verwendet werden. Die Messungen können bei einer Drehzahl der Scheibe von 24000 UpM durch Einspritzen von 0,1 ml einer verdünnten Kautschukdispersion (wässrige 24 Gew.-% Saccharose-Lösung, enthaltend ca. 0,2-2 Gew.-% Kautschukteilchen) in die Scheibenzentrifuge, enthaltend die wässrige Zuckerlösung mit einem Saccharose Dichtegradienten von 8 bis 20 Gew.-%, durchgeführt werden. Zur Messung der gewichtsmittleren Teilchengröße $d_w$ des agglomerierend wirkenden Copolymers mit der Scheibenzentrifuge DC 24000 von CPS Instruments Inc. können 17,1 ml einer wässrigen Zuckerlösung mit einem Saccharose-Dichtegradienten von 3,5 bis 15,5 Gew.-% verwendet werden, um ein stabiles Sedimentationsverhalten der Teilchen zu erreichen. Ein Polyurethan-Latex (Teilchendichte 1,098 g / ml) mit einer engen Verteilung und einer mittleren Teilchengröße von 155 nm kann für die Kalibrierung verwendet werden.

Die Messungen können bei einer Drehzahl der Scheibe von 24000 UpM durch Einspritzen von 0,1 ml einer verdünnten Dispersion des Copolymers (hergestellt durch Verdünnen mit Wasser bis zu einem Gehalt von 1- 2 Gew.%) in die Scheibenzentrifuge, enthaltend die wässrige Zuckerlösung mit einem Saccharose Dichtegradienten von 3,5 bis 15,5 Gew.%, durchgeführt werden. Die Berechnung der gewichtsmittleren Teilchengröße $d_W$ und der gewichtsmittleren Teilchendurchmesser $d_{50}$ sowie $d_{10}$ und $d_{90}$ erfolgt mittels der Formel:

$$d_w = \text{Summe} ( ni * di^4 ) / \text{Summe}( ni * di^3 ),$$

wobei ni die Anzahl der Partikel mit dem Durchmesser di ist.

Die Feststoffgehalte können nach Trocknung der Proben bei 180°C für 25 min in einem Trockenschrank gemessen werden.

d) Glanzverhalten:
Zur Bestimmung des Glanzverhaltens können mittels einer Spritzgussmaschine bei einer Massetemperatur von 240°C und einer Werkzeugtemperatur von 70°C rechteckige Plättchen mit den Abmessungen 60 mm x 40 mm x 2 mm aus der Polymerschmelze Hergestellt werden. Der Oberflächenglanz kann durch Reflektionsmessung nach DIN 67530 (in der 2014 aktuellen Version) bei einem Winkel von 20° gemessen werden.

e) Yellowness Index YI:
Die Bestimmung des YI-Wertes kann an Plättchen mit den Abmessungen 60 x 40 x 2 mm, hergestellt durch Spritzguss bei einer Massetemperatur von 240°C und einer Werkzeugtemperatur von 70°C nach ASTM-Methode E313-96 (Lichtart / Beobachter-Kombination C/2°) erfolgen.

f) Quellungsindex QI und Gelgehalt [%]:
Die Werte für den Gelgehalt können mit dem Drahtkäfigverfahren in Toluol (siehe Houben-Weyl, Methoden der Organischen Chemie, Makromolekulare Stoffe, Teil 1, Seite 307 (1961) Thieme Verlag Stuttgart) ermittelt werden. Aus der wässrigen Dispersion der Pfropfgrundlage kann durch Verdampfen des Wassers ein Film hergestellt werden. 0,2 g dieses Films können dann mit 50 g Toluol versetzt werden. Nach 24 Stunden kann das Toluol von der aufgequollenen Probe abgetrennt und die Probe ausgewogen werden. Nach 16 Stunden Trocknen der Probe im Vakuum bei 110°C kann dann erneut ausgewogen werden. Der Quellungsindex wird bestimmt durch:

Quellungsindex QI = [Gequollenes Gel mit Toluol vor dem Trocknen] / [Gel nach dem Trocknen]

Der Gelgehalt wird bestimmt durch:

Gelgehalt = [Masse der im Vakuum getrockneten Probe] / [Einwaage der Probe vor der Quellung] x 100

2. Herstellung der Komponenten und Formmassen

Herstellung und Agglomerisierung der Pfropfgrundlage B

Die Herstellung der Pfropfgrundlage B erfolgt durch Emulsionspolymerisation nach dem Zulaufverfahren. Als Comonomer werden 7 Gew.-% Styrol verwendet.
Die Emulsionspolymerisation wird in einem 150 L- Reaktor bei einer Temperatur von 67°C durchgeführt. 43120 g der Monomer-Mischung (Butadien und Styrol) werden bei 67°C in Anwesenheit von 431,2 g tert.-Dodecylmercaptan (TDM), 311 g Kaliumstearat, 82 g Kaliumpersulfat, 147 g Natriumhydrogencarbonat und 58400 g vollentsalztem Wasser (VE-Wasser) polymerisiert, wobei ein Latex der Pfropfgrundlage mit einem Feststoffgehalt von 41.5 Gew.-% erhalten wird. Die Monomere werden in der im Folgenden aufgeführten Reihenfolge in den Reaktor gegeben:

Zunächst erfolgt die Zugabe von Styrol in einer Menge von 7 Gew.-%, bezogen auf die gesamte Monomermenge, innerhalb von 20 Minuten. Im Anschluss an die Styrolzugabe erfolgt die Zugabe eines ersten Teils des Butadiens in einer Menge von 7 Gew.-%, bezogen auf die gesamte Monomermenge, innerhalb von 25 Minuten. Der restliche Teil des Butadiens, der 86 Gew.-%, bezogen auf die gesamte Monomermenge, entspricht, wird anschließend innerhalb von 8,5 Stunden zugegeben. TDM wird zu Beginn der Reaktion auf einmal zugegeben. Der Umsatz beträgt ≥ 95 %.

Die erhaltene Pfropfgrundlage B weist einen Styrolgehalt von 7 Gew.-% bezogen auf den Feststoffanteil, einen Gelgehalt von 76,6 Gew.-%, einen Quellungsindex von 22, einen $d_{10}$ von 71 nm, einen $d_{50}$ von 84 nm und einen $d_{90}$ von 100 nm auf.

Zur Agglomerisierung wurden in einen 10 Liter-Vierhalskolben mit Metallrührer 4792,39 g wässrige Dispersion der Pfropfgrundlage B (Gehalt an Pfropfgrundlage: 43,18 %) und 347,61 g vollentsalztes Wasser (VE-Wasser) vorgelegt. Dieser Ansatz wurde in einem mit einer Kühlspirale und einem Tauchsieder ausgestatteten Wasserbad auf 68°C erhitzt und bei 180 Umdrehungen pro Minute (UpM) gerührt. Hierzu wurden über einen Zeitraum von 25 min 110,49 g Agglonal 574 in 323,75 g VE-Wasser zugegeben. Dazu wurde 17,94 g Kaliumstearat in weiteren 1311,10 g VE-Wasser gegeben. Dann wurde 5 min lang bei 180 UpM nachgerührt. Die Herstellung und Verwendung von Agglonal ist bespielhaft in WO 2014/170406, WO 2014/170407 und PCT/EP2014/057826 beschrieben.

Eine entsprechende Pfropfgrundlage B kann auch aus kommerzieller Quelle bezogen werden.

Styrol-Pfropf-Copolymer

Zum direkten Vergleich von erfindungsgemäßen und üblichen Styrol-Pfropf-Copolymeren wurden Styrol-Pfropf-Copolymere, die vergleichbar hergestellt worden sind und sich lediglich durch den Zulauf an Monomeren unterscheiden, hergestellt:

a) mittels eines üblichen Herstellungsverfahrens, ohne Änderung des Masseverhältnisses von Styrol-Monomeren A1 zu Vinylcyanid-Monomeren A2 der Monomerenzugabe (Vergleichsversuch);
b) mittels eines Herstellungsverfahrens, bei dem das Masseverhältnis von Styrol-Monomeren A1 zu Vinylcyanid-Monomeren A2 zum Ende des Zeitraums der Monomerenzugabe hin erniedrigt wird; und
c) mittels eines Herstellungsverfahrens, bei dem das Masseverhältnis von Styrol-Monomeren A1 zu Vinylcyanid-Monomeren A2 zum Ende des Zeitraums der Monomerenzugabe hin erniedrigt wird und eine anschließende Zugabe von Vinylcyanid-Monomeren A2 erfolgt.

a) Ohne Änderung des Masseverhältnisses von Styrol-Monomeren A1 zu Vinylcyanid-Monomeren A2 der Monomerenzugabe (Vergleichsversuch, übliche Herstellung)

Zu der agglomerisierten Pfropfgrundlage B wurde, um die Pfropfpolymerisation anzuregen, 2,36 g Kaliumperoxodisulfat in 100,00 g VE-Wasser zugegeben. Hierbei wurde bei 220 UpM gerührt. Es folgte die Zugabe der Styrol-Monomere A1 und der Acrylnitrilmonomere A2 nach folgendem in Tabelle 1 dargestellten Schema:

Tabelle 1. Zugabe der Styrol-Monomere A1 und der Acrylnitril-Monomere A2 ohne Änderung des Masseverhältnisses

| Zulauf | Zulaufzeit [min] | zugegebene Masse an Styrol [g] | zugegebene Masse an Acrylnitril [g] | Masseverhältnis Styrol: Acrylnitril |
|---|---|---|---|---|
| A | 34 | 262,40 | 65,60 | 80:20 |
| B | 120 | 787,20 | 196,80 | 80:20 |

Zulauf a wurde hierbei bei einer Temperatur von 68°C und unter Rühren bei 220 UpM durchgeführt. Nach Zulauf a wurde 10 min lang bei einer Temperatur von 68°C und unter Rühren bei 220 UpM nachpolymerisiert.

Zulauf b wurde hierbei bei einer linear von 68°C bis 80°C ansteigenden Temperatur unter Rühren bei 220 UpM durchgeführt. Dadurch ergibt sich ein über die gesamte Zulaufzeit der Monomeren integriertes Masseverhältnis von Styrol zu Acrylnitril von 80 zu 20.

Um die Pfropf-Polymerisation abzuschließen, wurden unter Rühren weitere 2,36 g Kaliumperoxodisulfat in 100,00 g VE-wasser zugegeben und 60 min lang bei 80°C unter Rühren nachpolymerisiert. Zudem wurden unter Rühren 64,00 g des Antioxidants Wingstay L zugegeben. Anschließend wurde in üblicher Weise mit einer etwa 1 Gew.-%igen Magnesiumsulfatlösung ausgefällt. Nach dem Filtrieren des Pfropfcopolymers, wurde der Niederschlag zweimal mit entmineralisiertem Wasser gewaschen und mittels einem entwässernden Extruder gemäß WO 2004/028781 bzw. WO 2009/103714 weiterverarbeitet.

b) Absenkung des Masseverhältnisses von Styrol-Monomeren A1 zu Vinylcyanid-Monomeren A2 der Monomerenzugabe

Es wurde entsprechend dem vorstehend unter a) beschriebenen Verfahren vorgegangen, mit dem Unterschied, dass die Zugabe der Styrol-Monomere A1 und der Acrylnitrilmonomere A2 nach folgendem in Tabelle 2 dargestellten Schema erfolgte:

Tabelle 2. Zugabe der Styrol-Monomere A1 und der Acrylnitrilmonomere A2 mit Gradient des Masseverhältnisses

| Zulauf | Zulaufzeit [min] | zugegebene Masse an Styrol [g] | zugegebene Masse an Acrylnitril [g] | Masseverhältnis Styrol: Acrylnitril |
|---|---|---|---|---|
| a | 34 | 282,34 | 45,92 | 86:14 |
| b1 | 40 | 268,70 | 59,04 | 82:18 |
| b2 | 40 | 256,10 | 72,16 | 78:22 |
| b3 | 40 | 242,46 | 85,28 | 74:26 |

Zulauf a wurde hierbei bei einer Temperatur von 68°C und unter Rühren bei 220 UpM durchgeführt. Nach Zulauf a wurde 10 min lang bei einer Temperatur von 68°C und unter Rühren bei 220 UpM nachpolymerisiert.

Zuläufe b1-3 wurden hierbei bei einer über diese Zulaufzeiten insgesamt linear von 68°C bis 80°C ansteigenden Temperatur unter Rühren bei 220 UpM durchgeführt.

Dadurch ergibt sich ein über die gesamte Zulaufzeit der Monomeren integriertes Masseverhältnis von Styrol zu Acrylnitril von 80 zu 20.

c) Absenkung des Masseverhältnisses von Styrol-Monomeren A1 zu Vinylcyanid-Monomeren A2 der Monomerenzugabe und anschließende Zugabe von Vinylcyanid-Monomeren A2

Es wurde entsprechend dem vorstehend unter a) und b) beschriebenen Verfahren vorgegangen, mit dem Unterschied, dass die Zugabe der Styrol-Monomere A1 und der Acrylnitrilmonomere A2 nach folgendem in Tabelle 3 dargestellten Schemata erfolgte:

Tabelle 3. Zugabe der Styrol-Monomere A1 und der Acrylnitril-Monomere A2 mit Gradient des Masseverhältnisses mit anschließender Acrylnitril-Monomer-Zugabe über 10 min

| Zulauf | Zulaufzeit Styrol [min] | Zugegebene Masse an Styrol [g] | Zulaufzeit Acrylnitril [min] | Zugegebene Masse an Acrylnitril [g] | Masseverhältnis Styrol:Acrylnitril |
|---|---|---|---|---|---|
| a | 34 | 282,34 | 34 | 45,92 | 86:14 |
| b1 | 40 | 268,70 | 40 | 59,04 | 82:18 |
| b2 | 40 | 256,10 | 40 | 72,16 | 78:22 |
| b3 | 30 | 242,46 | 40 | 85,28 | 74:26 |

Zulauf a wurde hierbei bei einer Temperatur von 68°C und unter Rühren bei 220 UpM durchgeführt. Nach Zulauf a wurde 10 min lang bei einer Temperatur von 68°C und unter Rühren bei 220 UpM nachpolymerisiert.

Zuläufe b1-3 wurden hierbei bei einer über diese Zulaufzeiten insgesamt linear von 68°C bis 80°C ansteigenden Temperatur unter Rühren bei 220 UpM durchgeführt.

In den letzten 10 min der Zulaufzeit wurden, wie der Tabelle 3 entnommen werden kann, lediglich Acrylnitril-Monomere A2 aber keine Styrol-Monomere A1 mehr zugegeben. Dadurch ergibt sich ein über die gesamte Zulaufzeit der Monomeren integriertes Masseverhältnis von Styrol zu Acrylnitril von 80 zu 20.

Entsprechend diesem Vorgehen wurden Ansätze hergestellt, bei denen in den letzten 10 min, 20 min bzw. 30 min der Zulaufzeit lediglich Acrylnitril-Monomere A2 aber keine Styrol-Monomere A1 mehr zugegeben wurden.

Thermoplastisches Copolymer

Statistisches Copolymer aus Styrol und Acrylnitril (SAN-Copolymer) mit einem Verhältnis von Styrol zu Acrylnitril von 76:24 mit einer Viskositätszahl von 64 ml/g (Konzentration 5 g/l in Dimethylformamid bei 20°C gemessen) und einer Schmelzflussrate MVR von 64 [ml/10 min], gemessen bei 220°C und 10 kg Belastung nach ISO 1133 (in der 2014 aktuellen Version), hergestellt durch radikalische Lösungspolymerisation.

Zusatzstoffe

Silikonöl Polydimethylsiloxan mit einer kinematischen Viskosität von 30.000 mm$^2$/s

Thermoplastische Formmassen aus SAN-Polymer und Styrol-Pfropf-Copolymer

Das SAN-Polymer und ein vorgenanntes Styrol-Pfropf-Copolymer wurden in einem Doppelschneckenextruder mit einem Wellendurchmesser von 25 mm gemischt. In der Extrusionszone wurde die Temperatur auf 200 bis 250°C eingestellt und die Verarbeitung erfolgte bei 700 UpM des Doppelschneckenextruders.

Die Batch-Größe für alle Beispiele war 4 kg. Mit den erhaltenen ABS-Formmassen wurden Tests zur Bestimmung der Fließfähigkeit (MVR), der Charpy-Kerbschlagzähigkeit, des Yellowness Index (YI), und des Oberflächenglanzes durchgeführt. Dabei wurden die oben aufgeführten Testmethoden angewandt.

3. Ergebnisse der Messungen

Für die Formmassen wurden in zwei unabhängigen Versuchsreihen folgende Ergebnisse erzielt:

Tabelle 4. Versuchsreihe 1. Hierbei wurden 33 Gew.-% Propfkautschuk, 66 Gew.-% SAN und 1 Gew.-% Stabibatch eingesetzt.

| Eigenschaft | Herstellung des Styrol-Pfropf-Copolymers | | | | |
|---|---|---|---|---|---|
| | konstantes A1:A2 Masseverhältnisses (Vergleich) | Gradient des A1:A2-Masseverhältnisses | Gradient des A1:A2-Masseverhältnisses, am Ende 10 min Zugabe vonA2 | Gradient des A1:A2-Masseverhältnisses, am Ende 20 min Zugabe von nur A2 | Gradient des A1:A2-Masseverhältnisses, am Ende 30 min Zugabe von nur A2 |
| Charpy-Kerbschlagzähigkeit, RT [kJ/m$^2$] | 28,3 | 28,3 | 30,4 | 30,6 | 35,1 |
| Charpy-Kerbschlagzähigkeit, -20°C [kJ/m$^2$] | 8,56 | 8,97 | 10,9 | 9,45 | 8,95 |
| Fließfähigkeit (MVR) [ml/10 min] | 10,32 | 10,45 | 10,72 | 10,77 | 10,43 |
| Yellowness Index (YI) | 20,5 | 19,2 | 20,2 | 21,2 | 23,3 |
| Oberflächenglanz 20° | 81,8 | 82,1 | 80,9 | 81,3 | 79,4 |
| Styrol-Restmonomere [ppm] | 600 | 470 | 440 | 440 | 430 |
| Acrylnitril-Restmonomere [ppm] | 3 | 3 | 3 | 3 | 4 |
| Kautschukgehalt [Gew.-%] | 34,5 | 34,7 | 34,9 | 35,0 | 34,7 |

Tabelle 5. Versuchsreihe 2. Hierbei wurden 35 Gew.-% Propfkautschuk, 64 Gew.-% SAN und 1 Gew.-% Stabi-batch eingesetzt.

| Eigenschaft | Herstellung des Styrol-Pfropf-Copolymers | | | | |
|---|---|---|---|---|---|
| | konstantes A1:A2-Masseverhältnisses (Vergleichsversuch) | Gradient des A1:A2-Masseverhältnisses | Gradient des A1:A2-Masseverhältnisses, am Ende 10 min Zugabe von nur A2 | Gradient des A1:A2-Masseverhältnisses, am Ende 20 min Zugabe von nur A2 | Gradient des A1:A2-Masseverhältnisses, am Ende 30 min Zugabe von nur A2 |
| Charpy-Kerbschlagzähigkeit, RT [kJ/m$^2$] | 30,3 | 30,1 | 33,4 | 33,1 | 36,9 |
| Charpy-Kerbschlagzähigkeit, -20°C [kJ/m$^2$] | 11,0 | 10,8 | 11,4 | 11,3 | 11,4 |
| Fließfähigkeit (MVR) [ml/10 min] | 9,09 | 9,70 | 9,18 | 9,51 | 9,33 |
| Yellowness Index (YI) | 19,8 | 18,5 | 19,9 | 19,6 | 22,4 |
| Oberflächenglanz 20° | 84,7 | 83,2 | 82,8 | 82,5 | 80,8 |
| Styrol-Restmonomere [ppm] | 630 | 490 | 460 | 430 | 450 |
| Acrylnitril-Restmonomere [ppm] | 3 | 3 | 3 | 3 | 4 |
| Kautschukanteil [Gew.-%] | 36,9 | 36,3 | 37,4 | 37,1 | 36,4 |

Aus den vorstehend gezeigten experimentellen Daten (siehe Tabellen 4 und 5) wird ersichtlich, dass die Formmassen, die vergleichbar hergestellt worden sind, und sich lediglich durch den Zulauf an Monomeren unterscheiden (gleichbleibend ohne Änderung oder Gradient, mit oder ohne alleinige Zugabe an Acrylnitril am Ende der Zulaufzeit) über vergleichbare physikalische und chemische Eigenschaften wie Kerbschlagzähigkeit bei Raumtemperatur (RT) und -20°C, Fließfähigkeit, Yellowness Index, Oberflächenglanz und Kautschukanteil.

Dagegen ist der Gehalt an Styrol-Restmonomeren in der Formmasse durch den Gradienten des Zulaufs signifikant von 600 auf 470 ppm bzw. von 630 auf 490 ppm erniedrigt, ist daher um etwa 22% niedriger als in der Formmasse, die Styrol-Pfropf-Copolymere, die mittels eines üblichen Herstellungsverfahrens ohne Änderung des A1:A2-Masseverhältnisses hergestellt wurden. Durch ein Zugeben von Acrylnitril ohne weitere Zugabe an Styrol in den letzten 10 min der Zulaufzeit wird der Gehalt an Styrol-Restmonomeren sogar um etwa 27% gegenüber der Formmasse, die Styrol-Pfropf-Copolymere, mittels eines üblichen Herstellungsverfahrens ohne Änderung des A1:A2-Masseverhältnisses hergestellt wurden, erniedrigt. Daher tritt hier eine weitere Verbesserung um etwa 5% ein.

Da der Gehalt an Acrylnitril-Restmonomeren in etwa bleibt, ist die Absenkung des Gehalts an Restmonomeren insgesamt (daher Styrol- und Acrylnitril-Restmonomere) ebenso hoch.

Durch die Absenkung des Gehalts an Restmonomeren nimmt auch die Menge an freigesetzten, flüchtigen Restmonomeren ab, so dass weniger geruchlich wahrnehmbare Restmonomere freigesetzt werden. Die erfindungsgemäßen Formmassen sind daher geruchsneutraler als vergleichbare Formmassen, die mittels eines üblichen Herstellungsverfahrens unter konstanter Zugabe an Styrol und Acrylnitril hergestellt wurden.

Es wird erkannt werden, dass die dargestellten Änderungen des Restmonomeren-Gehalts nur von den Änderungen des Restmonomeren-Gehalts in den Styrol-Pfropf-Copolymeren herrühren, jedoch die Änderungen des Restmonomeren-Gehalts in der gesamten Formmasse darstellen. Änderungen in den eingesetzten Styrol-Pfropf-Copolymeren selbst sind daher noch deutlicher.

Überraschend konnte zudem gezeigt werden, dass der verringerte Gehalt an Restmonomeren nicht nur durch die leichtere Entfernbarkeit der Vinylcyanid-Monomere A2 von den Styrol-Pfropf-Copolymeren erreicht wurde. Auch der Gehalt an Restmonomeren konnte bereits in der diese Styrol-Pfropf-Copolymere enthaltenden, nicht-aufgereinigten Dispersion durch das erfindungsgemäße Verfahren deutlich verringert werden.

Hierzu wurden Styrol-Pfropf-Copolymere enthaltende Dispersionen, die mittels eines üblichen Herstellungsverfahrens unter gleichbleibender Zugabe an Styrol und Acrylnitril hergestellt wurden mit solchen verglichen, die mittels eines Verfahrens mit einem Gradient des Monomeren-Zulaufs von 16 zu 24 Gew.-% Acrylnitril und von 84 zu 76 Gew.-% Styrol hergestellt wurden (siehe Tabelle 6):

Tabelle 6. Versuchsreihe 3

| Eigenschaft | Herstellung des Styrol-Pfropf-Copolymers | | | | |
|---|---|---|---|---|---|
| | konstantes A1:A2-Masseverhältnisses (Vergleichsversuch) | Gradient des A1:A2-Masseverhältnisses | Gradient des A1:A2-Masseverhältnisses, am Ende 10 min Zugabe von nur A2 | Gradient des A1:A2-Masseverhältnisses, am Ende 20 min Zugabe von nur A2 | Gradient des A1:A2-Masseverhältnisses, am Ende 30 min Zugabe von nur A2 |
| Styrol-Restmonomere [ppm] | 3700 | 3200 | 2700 | 2300 | 1500 |
| Acrylnitril-Restmonomere [ppm] | 130 | 250 | 180 | 570 | 400 |
| Butadien-Restmonomere [ppm] | <10 | <10 | <10 | <10 | <10 |
| Ethylbenzol-Restmonomere [ppm] | 10 | 10 | 10 | 10 | 10 |
| Summe der Restmonomere insgesamt [ppm] | 3840 | 3460 | 2890 | 2880 | 1910 |

Der Gehalt an Restmonomeren insgesamt in der Dispersion wurde durch den Gradienten des Zulaufs signifikant von 3840 auf 3460 ppm erniedrigt, ist daher um etwa 10% niedriger als in der Dispersion, die Styrol-Pfropf-Copolymere, die mittels eines üblichen Herstellungsverfahrens ohne Änderung des A1:A2-Masseverhältnisses hergestellt wurden.

Durch ein Zugeben von Acrylnitril ohne weitere Zugabe an Styrol in den letzten 10 min der Zulaufzeit wird der Gehalt an Restmonomeren insgesamt sogar um etwa 24% gegenüber der Dispersion, die Styrol-Pfropf-Copolymere, mittels eines üblichen Herstellungsverfahrens ohne Änderung des A1:A2-Masseverhältnisses hergestellt wurden, erniedrigt. Daher tritt hier eine weitere Verbesserung um etwa 14% ein.

Die erfindungsgemäßen Dispersionen sind daher geruchsneutraler als vergleichbare Dispersionen, die mittels eines üblichen Herstellungsverfahrens unter gleichbleibender Zugabe an Styrol und Acrylnitril hergestellt wurden.

Gleiches gilt für die aus den erfindungsgemäßen Formmassen hergestellten Formteile.

**Patentansprüche**

1. Verfahren zum Herstellen von Styrol-Pfropf-Copolymeren umfassend die folgenden Schritte:

   (i) Bereitstellen und Agglomerieren der in einer Emulsion vorliegenden Pfropfgrundlage B;
   (ii) Zugeben von Styrol-Monomeren A1 und Vinylcyanid-Monomeren A2 zu der Pfropfgrundlage B über einen definierten Zeitraum der Monomerenzugabe; und
   (iii) gleichzeitiges Pfropf-Copolymerisieren der zugegebenen Styrol-Monomere A1 und der Vinylcyanid-Monomere A2 auf die agglomerierte Pfropfgrundlage B,

   bei welchem in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 10% niedriger ist als das Masseverhältnis der Komponenten der Monomerenzugabe über den gesamten Zeitraum der Monomerenzugabe integriert.

2. Verfahren gemäß Anspruch 1, bei dem sich an Schritt (iii) der folgende Schritt (iv) anschließt, wobei umfasst ist

   (iv) die Zugabe von Vinylcyanid-Monomeren A2 und Pfropf-Copolymerisieren dieser auf die agglomerierte Pfropfgrundlage B, wobei keine Styrol-Monomere A1 zugegeben werden.

3. Verfahren gemäß Anspruch 1 oder 2, wobei die Pfropfgrundlage B eine kautschukhaltige Pfropfgrundlage ist, bevorzugt wobei die Pfropfgrundlage B mehr als 50 Gew.-% bezogen auf den Feststoffanteil Dienkautschuk oder Dien-Vinyl-Copolymer-Kautschuk enthält, insbesondere wobei die Pfropfgrundlage B mehr als 50 Gew.-% bezogen auf den Feststoffanteil Polybutadien enthält.

4. Verfahren gemäß einem der Ansprüche 1 bis 3, wobei die Styrol-Monomere A1 ausgewählt sind aus der Gruppe bestehend aus Styrol, $\alpha$-Methylstyrol, $C_1$-$C_8$-Alkyl-kernsubstituiertem Styrol, oder Mischungen aus zwei oder mehr daraus, insbesondere wobei die Styrol-Monomere A1 Styrol sind.

5. Verfahren gemäß einem der Ansprüche 1 bis 4, wobei die Vinylcyanid-Monomere A2 Acrylnitril, Methacrylnitril oder Mischungen daraus sind, insbesondere jedoch Acrylnitril sind.

6. Verfahren gemäß einem der Ansprüche 1 bis 5, wobei das Masseverhältnis von Styrol-Monomeren A1 zu Vinylcyanid-Monomeren A2 über den gesamten Zeitraum der Monomerenzugabe integriert zwischen 50:50 und 95:5 beträgt, bevorzugt zwischen 60:40 und 90:10 beträgt, stärker bevorzugt zwischen 65:35 und 90:10 beträgt, insbesondere zwischen 70:30 und 85:15 beträgt.

7. Verfahren gemäß einem der Ansprüche 1 bis 6, wobei in Schritt (ii) das Masseverhältnis von Styrol-Monomeren A1 zu Vinylcyanid-Monomeren A2 der Monomerenzugabe im letzten Fünftel des Zeitraums der Monomerenzugabe um mindestens 20% niedriger ist als das Masseverhältnis über den gesamten Zeitraum der Monomerenzugabe integriert, insbesondere im letzten Fünftel des Zeitraums der Monomerenzugabe um mindestens 25% niedriger ist als das Masseverhältnis über den gesamten Zeitraum der Monomerenzugabe integriert.

8. Verfahren gemäß einem der Ansprüche 1 bis 7, wobei in Schritt (ii) das Masseverhältnis von Styrol-Monomeren A1 zu Vinylcyanid-Monomeren A2 über den Zeitraum der Monomerenzugabe hinweg kontinuierlich sinkt.

9. Verfahren gemäß einem der Ansprüche 1 bis 8, wobei das Masseverhältnis Pfropfgrundlage B zu Pfropfhülle aus Styrol-Monomeren A1 und Vinylcyanid-Monomeren A2 zwischen 80:20 und 20:80 beträgt, bevorzugt zwischen 70:30 und 30:70 beträgt, stärker bevorzugt zwischen 70:30 und 50:50 beträgt, insbesondere zwischen 58:42 und 62:38 beträgt.

10. Verfahren gemäß einem der Ansprüche 1 bis 9, wobei die erhaltenen Styrol-Pfropf-Copolymere nach dem Polymerisieren der Styrol-Monomeren A1 und Vinylcyanid-Monomere A2 mit wässriger Salzlösung in Kontakt gebracht werden, insbesondere wobei die Styrol-Pfropf-Copolymere anschließend von der wässrigen Salzlösung abgetrennt werden.

11. Verfahren gemäß Anspruch 10, wobei die nicht polymerisierten Vinylcyanid-Monomere A2 anschließend von der wässrigen Salzlösung abgetrennt werden und die abgetrennten Vinylcyanid-Monomere A2 gegebenenfalls für die Zugabe gemäß Schritt (ii) oder (iv) wiederverwendet werden.

12. Styrol-Pfropf-Copolymer, erhältlich nach einem Verfahren gemäß einem beliebigen der Ansprüche 1 bis 11.

13. Formmasse, enthaltend ein Styrol-Pfropf-Copolymer gemäß Anspruch 12 sowie mindestens eine weitere thermoplastische Polymer-Komponente, bevorzugt ein Styrol-Copolymer, insbesondere ein Styrol-Vinylcyanid-Copolymer, bevorzugt ein Styrol-Acrylnitril-Copolymer, insbesondere ein Styrol-Acrylnitril-Copolymer mit einem Masseverhältnis von Styrol zu Acrylnitril zwischen 70:30 und 90:10.

14. Formmasse gemäß Anspruch 13, wobei die Formmasse zusätzlich mindestens ein Polycarbonat, mindestens einen Polyester oder mindestens ein Polyamid enthält.

15. Formteil erhalten aus einer Formmasse gemäß einem der Ansprüche 13 oder 14.

**Claims**

1. A process for the production of styrene graft copolymers comprising the following steps:

   (i) provision and agglomeration of the graft base B present in an emulsion;
   (ii) addition of styrene monomers A1 and vinyl cyanide monomers A2 to the graft base B over a defined monomer feed time; and
   (iii) simultaneous graft copolymerization of the added styrene monomers A1 and of the vinyl cyanide monomers A2 onto the agglomerated graft base B,

   where, in step (ii), the ratio by mass of styrene monomers A1 to vinyl cyanide monomers A2 in the monomer feed in the final fifth of the monomer feed time is lower by at least 10% than the ratio by mass of the components of the monomer feed integrated over the entire monomer feed time.

2. The process as claimed in claim 1, where step (iii) is followed by the following step (iv), which comprises

   (iv) addition of vinyl cyanide monomers A2 and graft copolymerization of these onto the agglomerated graft base B, where no styrene monomers A1 are added.

3. The process as claimed in claim 1 or 2, where the graft base B is a rubber-containing graft base, preferably where the graft base B comprises more than 50% by weight, based on solids content, of diene rubber or diene-vinyl copolymer rubber, in particular where the graft base B comprises more than 50% by weight, based on solids content, of polybutadiene.

4. The process as claimed in any of claims 1 to 3, where the styrene monomers A1 are selected from the group consisting of styrene, $\alpha$-methylstyrene, $C_1$-$C_8$-alkyl-ring-substituted styrene, and mixtures of two or more thereof, in particular where the styrene monomers A1 are styrene.

5. The process as claimed in any of claims 1 to 4, where the vinyl cyanide monomers A2 are acrylonitrile, methacrylonitrile, or mixtures thereof, but in particular acrylonitrile.

**6.** The process as claimed in any of claims 1 to 5, where the ratio by mass of styrene monomers A1 to vinyl cyanide monomers A2 integrated over the entire monomer feed time is from 50:50 to 95:5, preferably from 60:40 to 90:10, more preferably from 65:35 to 90:10, in particular from 70:30 to 85:15.

**7.** The process as claimed in any of claims 1 to 6, where, in step (ii), the ratio by mass of styrene monomers A1 to vinyl cyanide monomers A2 in the monomer feed in the final fifth of the monomer feed time lower by at least 20% than the ratio by mass integrated over the entire monomer feed time, in particular in the final fifth of the monomer feed time lower by at least 25% than the ratio by mass integrated over the entire monomer feed time.

**8.** The process as claimed in any of claims 1 to 7, where in step (ii), the ratio by mass of styrene monomers A1 to vinyl cyanide monomers A2 decreases continuously over the monomer feed time.

**9.** The process as claimed in any of claims 1 to 8, where the ratio by mass of graft base B to graft shell made of styrene monomers A1 and of vinyl cyanide monomers A2 is from 80:20 to 20:80, preferably from 70:30 to 30:70, more preferably from 70:30 to 50:50, in particular from 58:42 to 62:38.

**10.** The process as claimed in any of claims 1 to 9, where, after polymerization of the styrene monomers A1 and vinyl cyanide monomers A2, the resultant styrene graft copolymers are brought into contact with aqueous salt solution, in particular where the styrene graft copolymers are then separated from the aqueous salt solution.

**11.** The process as claimed in claim 10, where the unpolymerized vinyl cyanide monomers A2 are then removed from the aqueous salt solution, and the vinyl cyanide monomers A2 removed are optionally reused for addition in step (ii) or (iv).

**12.** A styrene graft copolymer obtainable by a process as claimed in any one of claims 1 to 11.

**13.** A molding composition comprising a styrene graft copolymer as claimed in claim 12, and also at least one other thermoplastic polymer component, preferably a styrene copolymer, in particular a styrene-vinyl cyanide copolymer, preferably a styrene-acrylonitrile copolymer, in particular a styrene-acrylonitrile copolymer with a ratio by mass of styrene to acrylonitrile of from 70:30 to 90:10.

**14.** The molding composition as claimed in claim 13, where the molding composition also comprises at least one polycarbonate, at least one polyester, or at least one polyamide.

**15.** A molding obtained from a molding composition as claimed in claim 13 or 14.

**Revendications**

**1.** Procédé de fabrication de copolymères greffés du styrène, comprenant les étapes suivantes:

(i) préparation et agglomération d'une base de greffage B disponible en émulsion ;
(ii) ajout à la base de greffage B de monomères consistant en styrène A1 et de monomères consistant en cyanure de vinyle A2, pendant une période définie du temps d'addition des monomères, et
(iii) copolymérisation simultanée par greffage des monomères consistant en styrène A1 ajoutés et des monomères consistant en cyanure de vinyle A2 sur la base de greffage B agglomérée,

procédé dans lequel, dans l'étape (ii), le rapport massique monomères consistant en styrène A1/monomères consistant en cyanure de vinyle A2 des monomères ajoutés, dans le dernier cinquième du temps de l'ajout des monomères, est d'au moins 10% inférieur au rapport massique des composants monomères ajoutés, considéré par rapport à la totalité de la durée de l'ajout des monomères incorporés.

**2.** Procédé selon la revendication 1, dans lequel l'étape (iii) est suivie de l'étape suivante (iv), qui comprend:

(iv) l'ajout de monomères de cyanure de vinyle A2 et leur copolymérisation par greffage de ces derniers sur la base de greffage B agglomérée, sans aucune addition de monomères consistant en styrène A1.

**3.** Procédé selon la revendication 1 ou 2, dans lequel la base de greffage B est une base de greffage contenant du caoutchouc, de préférence dans lequel la base de greffage B contient plus de 50% en poids, exprimés par rapport à l'extrait sec de caoutchouc diénique ou de caoutchouc d'un copolymère diène/vinyle, notamment dans lequel la base de greffage B contient plus de 50% en poids, exprimés par rapport à l'extrait sec, de polybutadiène.

4. Procédé selon l'une des revendications 1 à 3, dans lequel les monomères styrène A1 sont choisis dans le groupe consistant en styrène, $\alpha$-méthylstyrène, les styrènes substitués sur le noyau par un groupe alkyle en $C_1$-$C_8$, ou les mélanges d'au moins deux d'entre eux, en particulier dans lequel les monomères styrène A1 sont le styrène.

5. Procédé selon l'une des revendications 1 à 4, dans lequel les monomères de cyanure de vinyle A2 sont l'acrylonitrile, le méthacrylonitrile ou leurs mélanges, en particulier cependant l'acrylonitrile.

6. Procédé selon l'une des revendications 1 à 5, dans lequel le rapport massique monomères consistant en styrène A1/monomères consistant en cyanure de vinyle A2, incorporé pendant la durée totale d'addition des monomères, est compris entre 50/50 et 95/5, de préférence entre 60/40 et 90/10, plus préférentiellement entre 65/35 et 90/10, en particulier entre 70/30 et 85/15.

7. Procédé selon l'une des revendications 1 à 6, dans lequel, dans l'étape (ii), le rapport massique monomères styrène A1/monomères vinyle A2 des monomères ajoutés dans le dernier cinquième de la durée d'ajout des monomères est d'au moins 20% inférieur au rapport massique des monomères incorporés pendant toute la durée de l'ajout, en particulier, dans le dernier cinquième de la durée d'ajout des monomères, et d'au moins 25 % plus faible que le rapport massique pour la totalité de la durée d'incorporation des monomères.

8. Procédé selon l'une des revendications 1 à 7, dans lequel, dans l'étape (ii), le rapport massique des monomères consistant en styrène A1/monomères vinyle A2 diminue en continu sur toute la durée de l'ajout des monomères.

9. Procédé selon l'une des revendications 1 à 8, dans lequel le rapport massique de la base de greffage B/enveloppe de greffage monomères consistant en styrène A1 et monomères de cyanure de vinyle A2 est compris entre 80/20 et 20/80, de préférence entre 70/30 et 30/70, plus préférentiellement entre 70/30 et 50/50, en particulier entre 58/42 et 62/38.

10. Procédé selon l'une des revendications 1 à 9, dans lequel les copolymères greffés du styrène obtenus après la polymérisation des monomères consistant en styrène A1 et des monomères consistant en cyanure de vinyle A2 sont mis en contact avec une solution aqueuse saline, en particulier où les copolymères greffés de styrène sont ensuite séparés de la solution aqueuse saline.

11. Procédé selon la revendication 10, dans lequel les monomères consistant en cyanure de vinyle non polymérisés A2 sont ensuite séparés de la solution aqueuse saline, et les monomères consistant en cyanure de vinyle A2 séparés sont éventuellement réutilisés pour être ajoutés dans l'étape (ii) ou (iv).

12. Copolymère greffé du styrène pouvant être obtenu par un procédé selon l'une quelconque des revendications 1 à 11.

13. Mélange à mouler contenant un copolymère greffé du styrène selon la revendication 12, ainsi qu'au moins un composant polymère thermoplastique supplémentaire, de préférence un copolymère de styrène, en particulier un copolymère styrène-cyanure de vinyle, de préférence un copolymère styrène-acrylonitrile, notamment un copolymère styrène-acrylonitrile présentant un rapport massique styrène/acrylonitrile compris entre 70/30 et 90/10.

14. Mélange à mouler selon la revendication 13, lequel mélange à mouler contient en outre au moins un polycarbonate, au moins un polyester ou au moins un polyamide.

15. Objet moulé obtenu à partir d'un mélange à mouler selon l'une des revendications 13 ou 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005022635 A
- DE 102005022632 A
- WO 2008020012 A
- DE 102005022632
- DE 102005022635
- EP 0022200 A
- EP 0077038 A
- WO 2002010222 A
- WO 2014170406 A
- WO 2014170407 A
- EP 2014057826 W
- WO 2004028781 A
- WO 2009103714 A

**In der Beschreibung aufgeführte Nicht-Patentliteratur**

- Makromolekulare Stoffe. **HOUBEN-WEYL.** Methoden der Organischen Chemie. Thieme Verlag Stuttgart, 1961, 307